# EUROPEAN PATENT SPECIFICATION

(11) **EP 0 380 211 B1**
(45) Date of publication and mention of the grant of the patent: **17.07.1996**
(21) Application number: 90300302.8
(22) Date of filing: 11.01.1990
(51) Int. Cl.: G06F 9/46

(54) **Method for information communication between concurrently operating computer programs**
Verfahren zur Übertragung von Daten zwischen gleichzeitig ablaufenden Rechnerprogrammen
Méthode de communication d'information entre des programmes d'ordinateur fonctionnant en concurrence

(30) Priority: 17.01.1989 US 297659
(43) Date of publication of application: 01.08.1990
(73) Proprietor: LANDMARK GRAPHICS CORPORATION, Houston Texas 77094 (US)
(72) Inventor: Good, William E., Houston Texas 77042 (US); Hildebrand, Harold A., Houston Texas 77086 (US); Snyder, Cedric V., Houston Texas 77077 (US); Stiles, Joseph L., Bellaire Texas 77401 (US); Whitfield, Kathleen M., Katy Texas 77379 (US); Jansen, Marie S., Spring Texas 77379 (US)
(74) Representative: Colgan, Stephen James

(56) References cited:
- EP-A- 0 366 583
- US-A- 3 686 641
- 7TH INTERNATIONAL CONFERENCE ON DISTRIBUTED COMPUTING SYSTEMS 21 September 1987, BERLIN, W. GERMANY pages 113 - 118; D. OTWAY ET AL.: 'REX: A remote execution protocol for object-oriented distributed applications'

## Description

### TECHNICAL FIELD

The present invention pertains in general to information communication between computer programs and can be used in conjunction with application programs which have a window display interface for a user.

A portion of the disclosure of this patent document contains material which is subject to copyright protection. The copyright owner has no objection to the facsimile reproduction by anyone of the patent document or the patent disclosure as it appears in the Patent and Trademark Office patent file or records, but otherwise reserves all copyright rights whatsoever.

### BACKGROUND OF THE INVENTION

Computer systems, particularly those operating with a network, often have multiple programs operating concurrently. It is frequently necessary for information to be transferred from one program to another, either within a single processor or across a network. A user must often process information by use of different programs as well as retrieving display information by using multiple programs which are active concurrently within the system. It is therefore important that information be quickly and easily transferred between multiple programs operating within the system. In addition, it is important that the user be able to easily and quickly change and specify the type of information exchanged between the multiple programs.

Windowing software technology is applied where it is important for a user to be able to display and interact with multiple programs which can be running concurrently in a computer system. A "window" is defined to be a portion of a display screen, such as a CRT. The window covers less than the entirety of the screen so that there may be multiple windows on the screen at one time. Typically, the user moves a cursor around the screen by use of an input device, such as a mouse or multiple keys at a keyboard. The cursor can be moved from one window to the next on the screen and, when the cursor is present within one of the windows, the user is placed in communication with the application program which generated that window. This type of windowing "environment" allows a user to access several different application programs easily so that he can accomplish multiple tasks without having to load a new program each time a new task must be performed.

As with other concurrent operating program systems, it is often necessary for a user to transfer information from one windowed program to another. Transferring information between programs is a principal objective of the present invention. The present invention can be well applied within a windowing environment, although such an environment is not necessary for practicing the invention.

There are two conventional techniques for transferring information between programs. The first is termed "cut and paste". This comprises pointing to (selecting) information such as text or data in one window to highlight it and thereby separate it from the remaining information in the window. The user then presses a special button or key which moves the selected information to an area of memory specially designated by the operating system and known as the "paste memory" or "clipboard". The user next moves the cursor to another window which is to receive the information. A "paste button" or command is invoked by the user to retrieve the stored information from the designated memory area and place it at the location of the cursor. Note that all steps of this process are carried out by the user and there is no designation of which of the window programs are information producer programs or information user programs.

A second conventional technique is to establish a programmed connection between two programs, each of which may display information in a window. Both programs must be designed to respond to a predetermined input command that causes information to be shifted from one program to the other. This operation, likewise, may be entirely under user direction and require a user input before it can function. Another disadvantage of this technique is that each communication path between pairs of programs must be programmed into the code of both programs, which creates an inflexible system. With this conventional method, it is difficult to add new communication paths or to change existing ones.

US-A-3 868 641 discloses a multiprogram digital processing system having interprogram communication, but only upon command of one program to a queue in memory. A disadvantage of such a system is the requirement that a program receiving data constantly issue commands to actively search memory for required data.

Therefore, there exists a need for a rapid and flexible method of transferring information between multiple application programs which are available concurrently to a user.

### SUMMARY OF THE INVENTION

A selected embodiment of the present invention is a method for communicating information between multiple programs operating concurrently in a computer system which includes an output device such as a screen for supplying information to a user and an input device such as a mouse or keyboard for receiving commands from the user. Each of a plurality of application programs may generate a window display at the output device. The user interfaces with the application programs through the corresponding window display and the input device. One or more information codes are registered with a dispatcher program for each of selected ones of the application programs to produce a list comprising information codes for each registered application program. Each of the information codes represents a specific type or collection of said information. The information codes in the list for the registered application programs represent information which is used by the corresponding application programs. Templates which include information and the corresponding information code are generated by one or more of the application programs and are transmitted to the dispatcher program. The information code in the generated template is compared to the information codes in the registered list to find any matches which identify the application programs that are registered to receive the information identified by the information code in the list. The dispatcher program then transmits the generated template, or at least the information in the generated template, to each of the identified application programs identified by matches. Thus, the information-producing application programs and information-using application programs can conduct information exchange as the information is produced without the need for communication direction by the user.

### BRIEF DESCRIPTION OF THE DRAWINGS

For a more complete understanding of the present invention and the advantages thereof, reference is now made to the following description taken in conjunction with the accompanying drawings in which:
FIGURE 1 is an illustration of a computer system with a screen having multiple windows opened on the screen, together with a keyboard, remote sensor and mouse input devices,
FIGURES 2A-2C illustrate a general template format as well as empty and full templates for data as used in accordance with the present invention,
FIGURES 3A-3D are overview, time sequenced, schematic diagrams showing data flow and the interaction of concurrently operating application programs and a dispatcher program for data template registrations in accordance with the present invention,
FIGURES 4A-4D are overview, time sequenced, schematic diagrams showing data flow and the interaction of concurrently operating application programs and a dispatcher program for data template registration in a more complex example in accordance with the present invention,
FIGURES 5A-5G are overview, time sequenced, schematic diagrams showing data flow and interaction of concurrently operating application programs and a dispatcher program for template-matching template registration in accordance with the present invention,
FIGURE 6 is an illustration of a computer system network which can implement the present invention,
FIGURE 7 is an illustration of application, dispatcher and network software interaction for a network system,
FIGURE 8 is a flow diagram illustrating the operation of an application program which requires data and registers with the dispatcher program to obtain the data,
FIGURE 9 is a flow diagram illustrating the operation of a data-generating program which provides data to the dispatcher program,
FIGURES 10-20 are flow diagrams illustrating the set-up of a registration list in a dispatcher program by an application program and the transfer of data between application programs and the dispatcher program,
FIGURE 21 is a structure chart for a dispatcher program,
FIGURE 22 is a structure chart for an application program which registers with the dispatcher program to receive data, and
FIGURE 23 is a structure chart for an application program which generates data and provides it to the dispatcher program.

### BRIEF DESCRIPTION OF THE APPENDICES

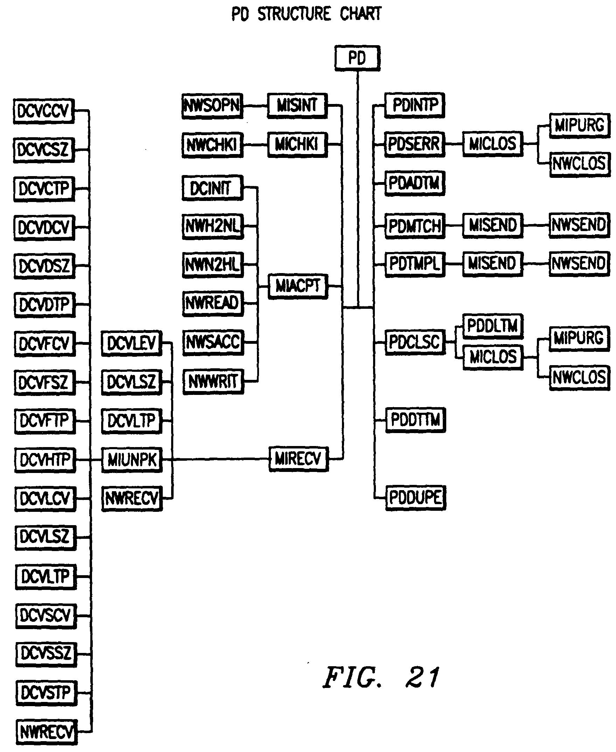

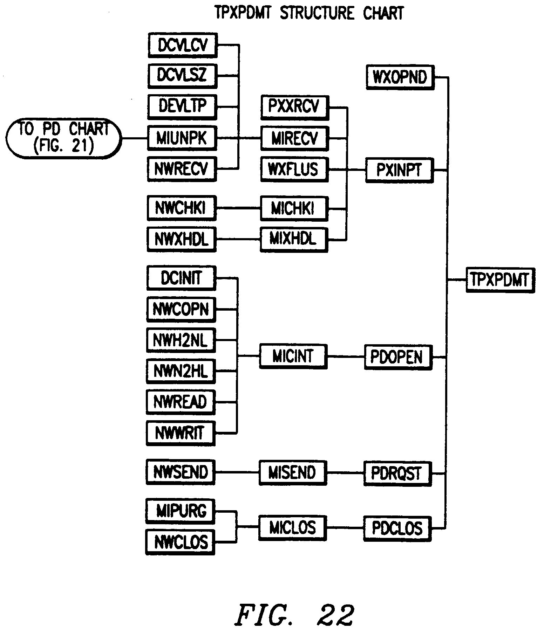

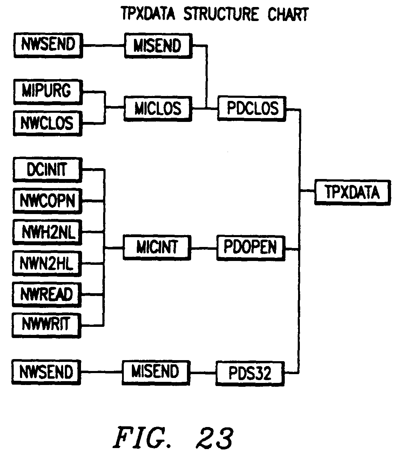

Program source code listings for the program embodiments set forth herein are included in the Appendices. The description of the present invention is made in reference to these appendices as well as to the figures.
Appendices I-1 through I-55 are source code listings for the pointing dispatcher (PD) program, which is structurally shown in FIGURE 21, together with each of the listed program modules which correspond to or interact with the PD program,
Appendices II-1 through II-5 are source code listings for TPXDATA , a data-generating program, which is structurally shown in FIGURE 22, and the associated program modules, which are not previously shown in Appendix I,
Appendices III-1 through III-2 are source code listings for TPXPDMT, a data-using program, which is structurally shown in FIGURE 23, and the associated program modules which are not previously shown in Appendices I or II.

The Appendices I, II and III correspond to the program structure charts in FIGURES 21, 22 and 23. However, each program module is listed only one time even though it may appear multiple times in the structure charts.

The source code listings in the Appendices are in the "C" language, which is a well-established and widely used language in the industry.

### DETAILED DESCRIPTION OF THE INVENTION

The present invention is a program for transferring data between concurrently operating programs in a computer system. As further discussed below, the computer system may be a network or a single processor. The embodiment disclosed for the present invention utilizes a "windowing" environment wherein application programs concurrently produce displays on a single screen. Such a "windowing" configuration can be produced by use of a program such as "X Window", a software product which is distributed by the MIT X Window Consortium and is sold by International Business Machines Corp. (IBM).

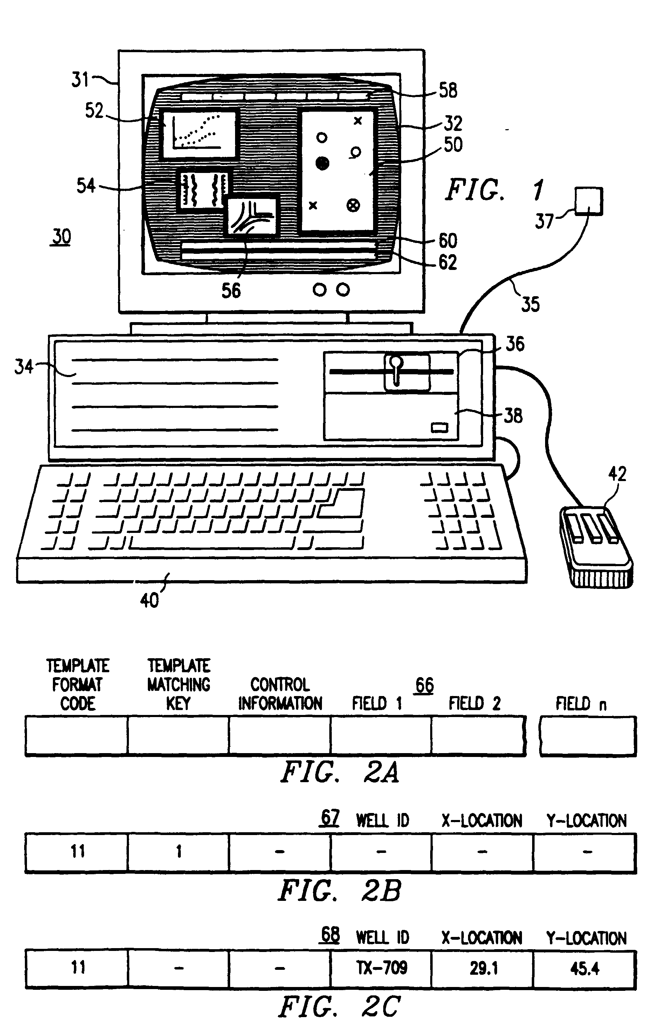

A hardware embodiment and sample screen display for implementing the present invention are illustrated in FIGURE 1. A computer system 30 includes a monitor 31 having a screen 32, a chassis 34 which includes the computer electronics as well as a floppy disk drive 36 and a fixed disk drive 38. A cable 35 connects the system 30 to a remote sensor 37 which is, for example, an industrial process sensor for monitoring parameters such as temperature, pressure, position, etc. The system further includes input devices which are a keyboard 40 and a "mouse" 42. The system 30 can be either a stand alone processor or one processor within a network which contains other processors, such as the system 30.

A selected embodiment of the system 30 is an IBM RT-PC model 115.

The RT-PC model 115 operates with the AIX operating system version 2.2, which is described in an IBM manual entitled "Using the AIX Operating System" copyright date 1985, 1988. This operating system includes the capability of having multiple concurrently operating programs, a process which is termed multi-tasking. This operating system can operate across a network such that programs and data at different points in the network can be accessed by programs at other points in the network.

As used herein the term "application program" is a program that provides the functional results requested by the user and is in contrast to operating system programs which provide for basic hardware and software operations but are not those which are specific to the user's application.

On the screen 32 there are illustrated various "windows" which have been opened for respective application programs. These include windows 50, 52, 54, and 56. The present invention is described in reference to a system for processing and evaluating well information for petroleum exploration activities, although the present invention is not limited to this application. The window 50 displays a map of well locations with different designations for various types of wells. The window 52 shows a cross plot of well log data. Window 54 is a log display for a range of depths in a particular well. The window 56 is a three dimensional plot, which is termed a spider plot.

The screen 32 further includes operational windows 58, 60 and 62 which are utilized to create or change window displays or call up operational programs and to display options to the user. A cursor is moved about the screen 32 by operation of the mouse 42 for selecting a particular program or data for use by the operator.

In this particular example, the operator has selected one of the wells displayed in the window 50 and has called up information related to that well. This information is displayed in the windows 52, 54, and 56. By evaluating well information in this way, the user can access and examine large quantities of information in an easily perceived manner. However, such utilization requires that the application programs rapidly transmit and receive information between them for producing the various displays.

The present invention serves to transfer data between various application programs, as discussed above. There is used in the present invention an item which is termed a "template". A description of the template in various forms is shown in FIGURES 2A, 2B, and 2C. Referring now to FIGURE 2A there is shown a "generic" template 66. Such a template 66 includes a plurality of fields which define the use of the template and the information conveyed by it. Viewing from left to right, there is first a "TEMPLATE FORMAT CODE" field, which contains one of a group of predefined codes that defines the information which is to be conveyed by the template. This code is used in relation to the data fields which are at the right hand side of the template. There may be one or more of such data fields. The template format code defines how many fields there are in a particular template as well as the type of information that is contained within each of the fields.

Template 66 further includes a "Template-matching KEY" field which serves the function of specifying particular occurrences of the data fields that must be matched before a "filled" template is sent to an identified application program. For each of the specified data fields in a template, including the TEMPLATE FORMAT CODE, there is a corresponding bit location or number in the Template-matching KEY field to specify if a particular field must be exactly matched before the received template is transmitted to a registered application program. Thus, if the Template-matching KEY field is zero, this field functions as a wildcard since nothing is required for a match, thereby allowing all data to match a template having a zero Template-matching KEY. A user which registers a template with a zero field for the Template-matching KEY field receives all data templates which are transmitted.

There is further included in template 66 a field termed "CONTROL INFORMATION" which serves the function of carrying information which was placed in this field originally by the registering application program. The CONTROL INFORMATION is typically the address of a subroutine for an application program. This particular subroutine is the one that is called when the filled data template is returned to the application program. When such a template is received, the receiving application program executes the indicated subroutine.

Referring now to FIGURE 28, there is shown a template 67 which is termed an "empty" template, which is a template with no information in the data fields. This template includes the number "11" in the TEMPLATE FORMAT CODE field. The code 11 is arbitrarily defined for this example as a template having three units or fields of information, one for each of three data fields. Field 1 is defined to be "WELL ID", which is the identification of a particular well, field 2 is defined to be "X LOCATION" and field 3 is defined to be "Y-LOCATION". The X and Y location fields define a particular location for the well identified in field 1. The locations specify a point within a two-dimensional grid system. Such locations can be, but are not necessarily, latitude and longitude numbers. Template 67 also includes the number "1" in the Template-matching KEY field. A "1" indicates that the TEMPLATE FORMAT CODE and only the TEMPLATE FORMAT CODE must match between two templates before the two templates are termed matching. The template 67 is further defined herein as a "data-matching template" which is registered on behalf of an application program to obtain for that program the data defined in fields 1, 2 and 3.

There may be any number of template format codes and these codes can be defined to represent any specific information or any collection of information. In a more general sense, these template format codes are information codes which likewise can represent any specific information, such as a WELL ID, or a collection of information, such as the combination of WELL ID, X-location and Y-location.

If an application program which requires data generates a template, such as shown in FIGURE 2B, this program may also provide a limitation so that it does not receive every template having template format code 11. For example, the data-using application program may insert specific WELL ID information in field 1. To indicate that only those templates having corresponding WELL ID data are to be received, a bit or number is set in the Template-matching KEY field corresponding to field 1. The program dispatcher (PD), described below, always checks each received template against the template-matching key to determine if a match exists for the specified data fields, including the TEMPLATE FORMAT CODE. Only if there are matches for all of these fields, template format code and any specified data fields, is the generated template then sent to the identified, requesting application program.

Referring to FIGURE 2C, there is shown what is termed a "full" template 68, which is a template having data in the data fields. This corresponds to the template 67, but includes actual data in the data fields 1, 2 and 3. In field 1, there is shown an actual WELL ID which is TX-709. In field 2, there is shown an actual X-LOCATION, which is 29.1 and in field 3 there is shown an actual Y-LOCATION, which is 45.4.

Depending upon their function, the application programs described herein may generate "empty" or "full" templates or both.

In the description of the present invention, the terms data and information are both used and the term information includes any form of data. The term "information code" means a code, such as a number, that represents a specific type of information or a collection of specific types of information.

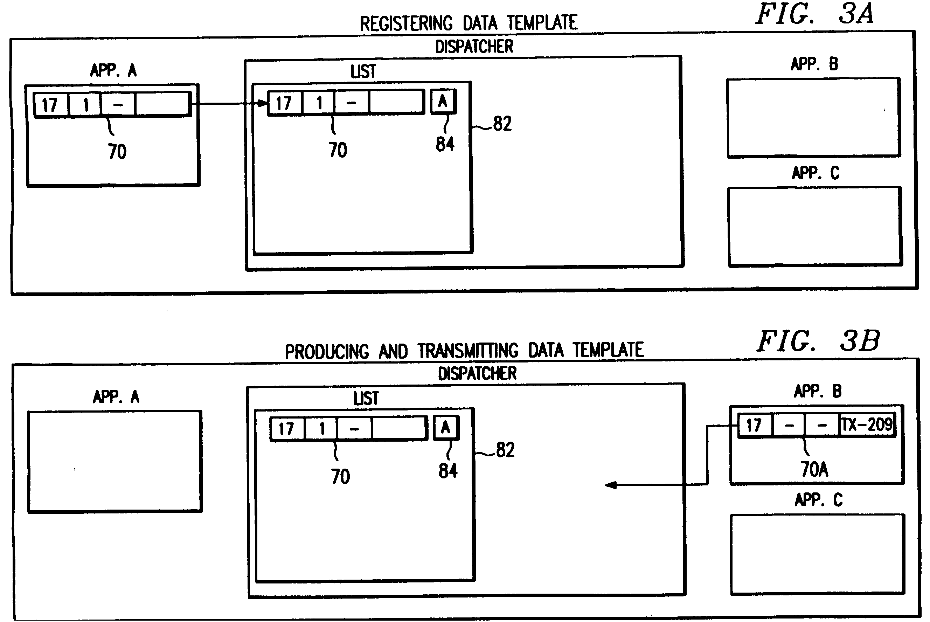

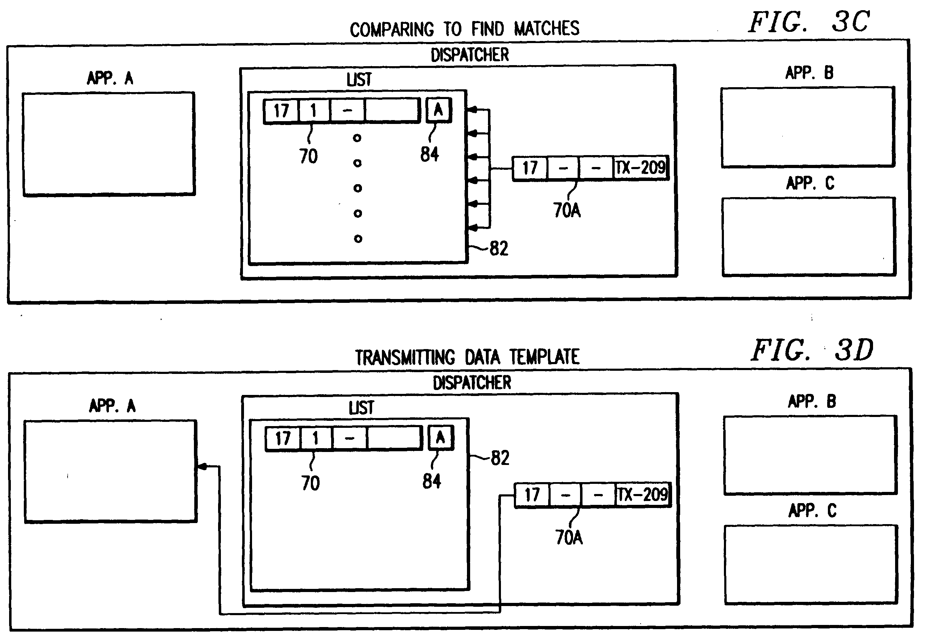

A functional description of the present invention is now made in reference to FIGURES 3A, 3B, 3C and 3D. These FIGURES schematically represent a time sequence of operations for transferring data between two application programs. A central program in the present invention is termed a "dispatcher". In the flow diagrams and appendices it is further referred to as a "Pointing Dispatcher", and this term is abbreviated as "PD". In FIGURES 3A-3D there are shown application programs A, B and C as well as a dispatcher program. It must be noted that the illustrations in FIGURES 3A-3D are not windows, as illustrated in FIGURE 1.

FIGURE 3A is a representation of the step "REGISTERING DATA TEMPLATE". In this step, the application program A transfers a template 70 to the dispatcher where it is placed in a list 82. The template 70 has a template format code of (17) which arbitrarily defines that the template includes one data field, which is shown at the right-hand side, and that this field comprises a WELL ID. The Template-matching KEY contains a 1, which indicates that the TEMPLATE FORMAT CODES must be matched. Nothing has been specified in the CONTROL INFORMATION field. In this instance the template 70 is termed an "empty template". The list 82 comprises one or more sets of corresponding elements comprising a template and an application identifier, such as identifier 84. The identifier 84 represents the identification of the particular application program which has registered a template in the list 82 with the dispatcher program.

The application program A registers the template 70 with the dispatcher program which stores that template in list 82 for the purpose of making it known to the dispatcher program that application program A requires the type of data identified by the template format code (17) in template 70.

Referring now to FIGURE 3B, there is the next time sequential step of "PRODUCING AND TRANSMITTING DATA TEMPLATE". A data-filled template can be generated by any one of many application programs. In this example, application program B generates a template 70A, which is the template 70 filled with data in its one data field. This "full" template 70A is then transmitted to the dispatcher program.

The next sequential Step is shown in FIGURE 3C. This is termed "COMPARING TO FIND MATCHES". In the dispatcher program the template format code in template 70A is compared to each of the template format codes in the templates within the registration list 82. There can be any number of entries recorded in the list 82. When a match is found between the template format code of the received template, such as 70A, with an entry in the list, such as template 70, there is then identified a particular application program by the application identifier, such as 84, which identifies the application program (A) that registered the template 70.

Referring now to FIGURE 3D there is shown the next sequential step which is termed "TRANSMITTING DATA TEMPLATE". In the previous step the dispatcher had determined that there was a match which identified the application program A. In response to this match the dispatcher program sends the template 70A to the application program A. The application program A receives the template 70A which includes the data "TX-209", which is the identification of a well. Thus, the application program A has received the data which it originally requested by registering with the dispatcher program. Note that with the present invention, the application programs do not communicate directly between each other, but instead each application program only communicates with the dispatcher program.

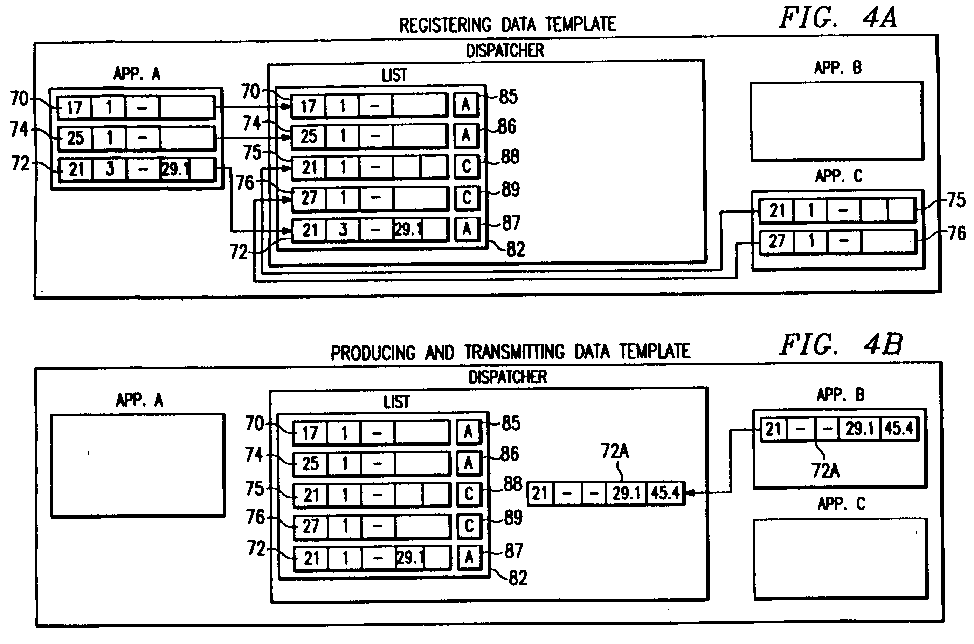

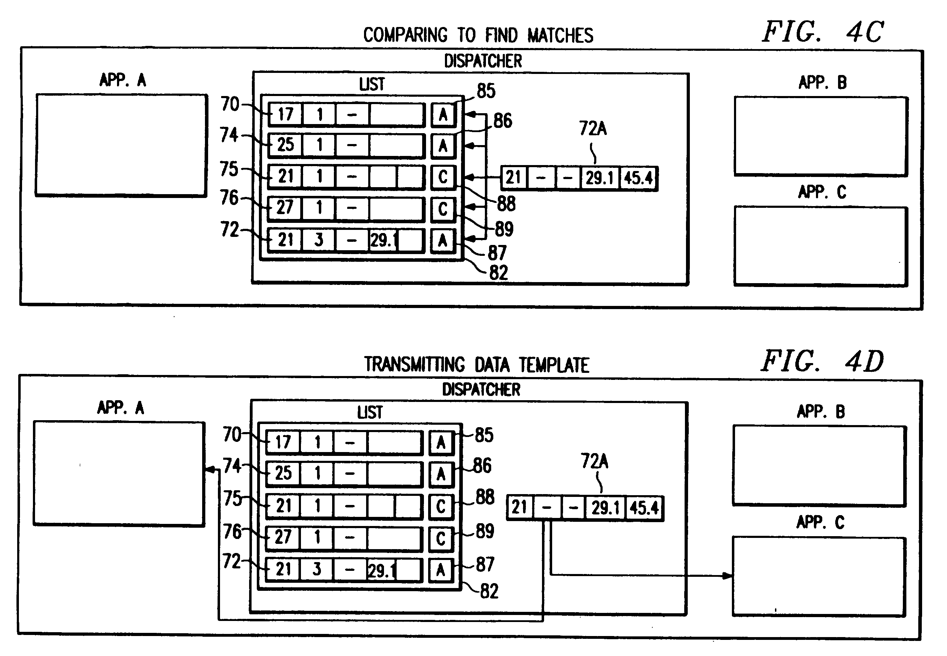

A more complex example of the present invention is now described in reference to FIGURES 4A, 4B, 4C and 4D. These figures likewise represent time sequential steps in accordance with the present invention, but demonstrate a more complex example. In FIGURE 4A, application program A registers three "empty" templates 70, 72, and 74 in the list 82 in the dispatcher program. These templates have respective template format codes of 17, 21 and 25. Template 70 is, for example, "WELL ID", template 72 is "WELL LOCATION" and template 74 is "LOG TYPE". Template 72 has two fields, which are X and Y coordinates. Additionally, template 72 has the X filled out to be 29.1, and the template-matching key is 3, which indicates that both the TEMPLATE FORMAT CODE and the first data field must correspond to a received template in order to have a match. Together with these templates, there are included corresponding application identifiers 85, 86 and 87. These templates can be registered at any time and in any order. Application program C likewise registers two templates 75 and 76. Template 76 is, for example, a depth range of a well. This template has a 27 format code. In the list 82, these templates are provided with corresponding application identifiers 88 and 89.

Referring now to FIGURE 4B, it is shown that the application program B produces the full template 72A and transmits this template to the dispatcher program. Template 72A is template 72 filled with data.

Referring now to FIGURE 4C, the template format codes in the templates stored in the list 82 and the fields corresponding to the bits set in the key field of each of the stored templates in the list 82 are compared against the same fields in the received template 72A. A comparison is made to find matches. These matches specify the application identifiers 88 and 87. This indicates that the application programs A and C have registered to receive the type of data identified as WELL LOCATION. Note that if the X field value in template 72A had been something other than 29.1, the template 72A would have only matched the application C stored template 75.

Referring now to FIGURE 4D, there is shown the step of transmitting the template 72A to each of the application programs A and C. In the described embodiment, the full template is transmitted to each of the application programs. It is not necessary that the entire template 72A be transmitted to the application programs A and C, but instead it may be desirable to transmit only the data portion and possibly other fields containing desired information to the application programs A and C.

Note that in the example shown in FIGURES 4A-4C that a single application program can register to receive more than one type of data. Likewise, any number of application programs can be registered with the list 82 in the dispatcher and it is possible that multiple application programs can register to receive the same data, although this is not necessary. Further, note that the dispatcher sends the generated template to each of the application programs where a match of the fields indicated by the template-matching key is identified. Thus, the method of the present invention makes it possible to readily create a very complex data communication procedure which operates without the necessity for user intervention or program customization. Further, as described below, any of the application programs may delete a registered template and terminate receipt of the type of data described in the template format code. Thus, the data communication interaction, although it may be complex, can be easily established and altered.

A further aspect of the present invention is now described in reference to FIGURES 5A-5G. There has previously been described a process of registering a data template by a data-using program so that upon generation of the registered data by a data-generating application program, the data is provided to the registered data-using application program. A further aspect of the present invention concerns the registration of data-generating programs with the dispatcher program. The purpose for such registration is to ensure that there exist user programs for data that will be generated. It is a waste of resources to generate and transmit data when there is no application program that requires that data. Thus, the following registration process is carried out so that data templates are generated only when there are active users of those templates.

Referring now to FIGURES 5A-5G, there is shown a time sequence of steps for carrying out a further aspect of the present invention. These steps show the process of registration by a data-generating application program. Referring now to FIGURE 5A, there are shown application programs A, B and C together with the dispatcher program. Within the dispatcher program there are two lists. A data-matching template list 90 serves the same function as the list 82 previously described in reference to FIGURES 3A-3D and FIGURES 4A-4D. A template-matching template list 91 is a registration of data-generating application programs which are available to generate the type of data specified in the registered template. In FIGURE 5A, application program B can generate data which is defined by the template format code 39. Refer to FIGURES 2A-2C for a description of template fields. Application program B generates a template 92 which includes the number 39 in the TEMPLATE FORMAT CODE field, with the number 1 in the Template-matching KEY field, and with nothing in the remainder of the fields. The format code 39 is arbitrary and, for the present example, defines data which specifies a WELL ID. This WELL ID, in a full template, is conveyed in one data field within the template 92. Application program B generates the template 92, which is an empty template, and transmits it to the dispatcher program where it is stored in the list 91 together with an application identifier 93, which identifier specifies the application program B. This registration records at the dispatcher program that the data type 39 can be generated, if it is required, by a data-using application program.

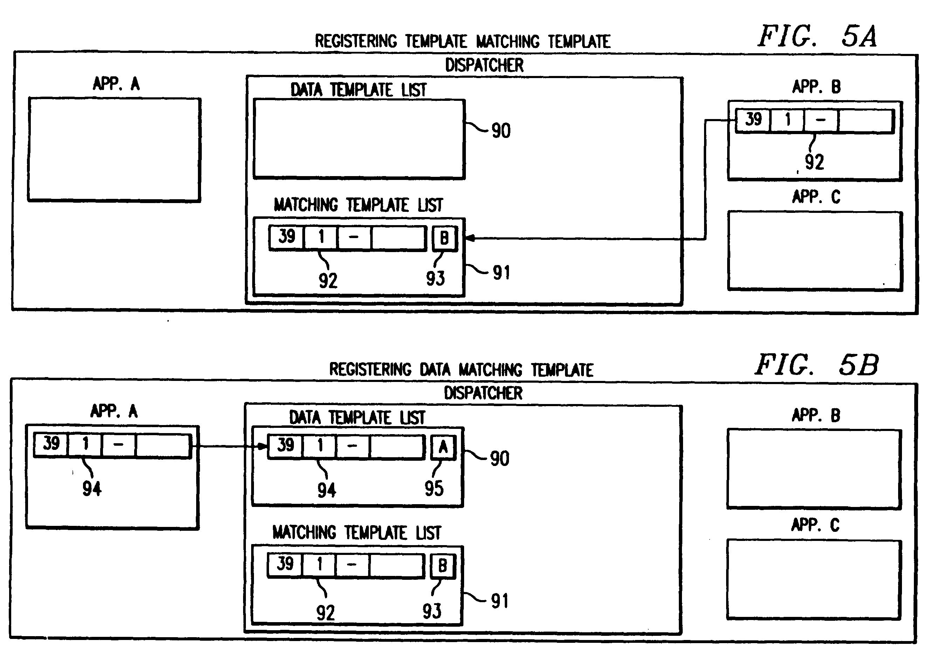

Referring now to FIGURE 5B, there is shown the step of "REGISTERING Data-matching TEMPLATE". In this step of the procedure, the application A program registers a template to indicate that it has a requirement for particular data. This is the same as the registration process described in FIGURES 3A-3D and 4A-4D. Application program A generates a template 94 which is transmitted to the dispatcher program and stored in the data template list 90. The data template 94 includes the code 39 in the TEMPLATE FORMAT CODE field and 1 in the Template-matching KEY field, while the remaining fields contain no information. The dispatcher program assigns an application identifier 95 to correspond to the stored template 94.

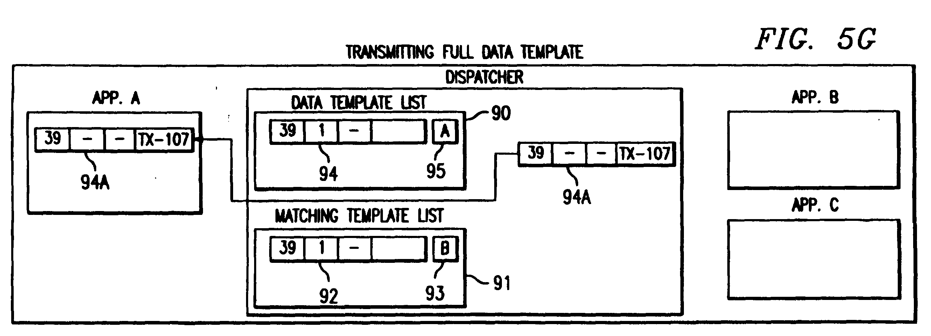

Referring now to FIGURE 5C, there is shown a step of "COMPARING TO FIND MATCH". In this step the dispatcher program compares the template format codes for the templates in the data template list 90 with the templates in the matching template list 91 to find any matches. If there is a match of these codes, the dispatcher program has determined that the data required by the application A program can be produced by the application B program. Thus, the application B program is identified as a required data-generating program.

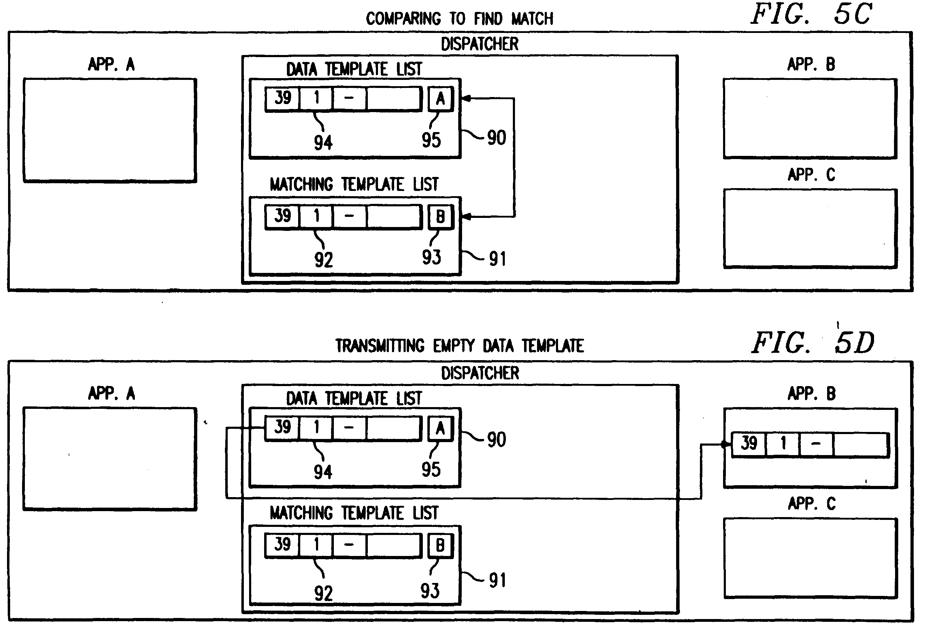

Referring now to FIGURE 5D, there is shown the step of "TRANSMITTING EMPTY DATA TEMPLATE". In this step the dispatcher program transmits the data template 94 from the list 90 to the application B program. This action serves to notify the application B program that a user has been registered to receive the data that application B program generates.

Referring now to FIGURE 5E, there is shown the step of "PRODUCING AND TRANSMITTING FULL DATA TEMPLATE". Upon receipt of the data template 94 by the application B program in the previous step, the application program B has been directed to proceed with the generation of its templates, namely those with a template format code of 39. In response, the application B program generates a template 94A, which corresponds to the template 94 but includes specific data within field 1 of the template. In this example the WELL ID "TX-107" is provided in this field. The template 94A is transmitted from the application B program to the dispatcher program.

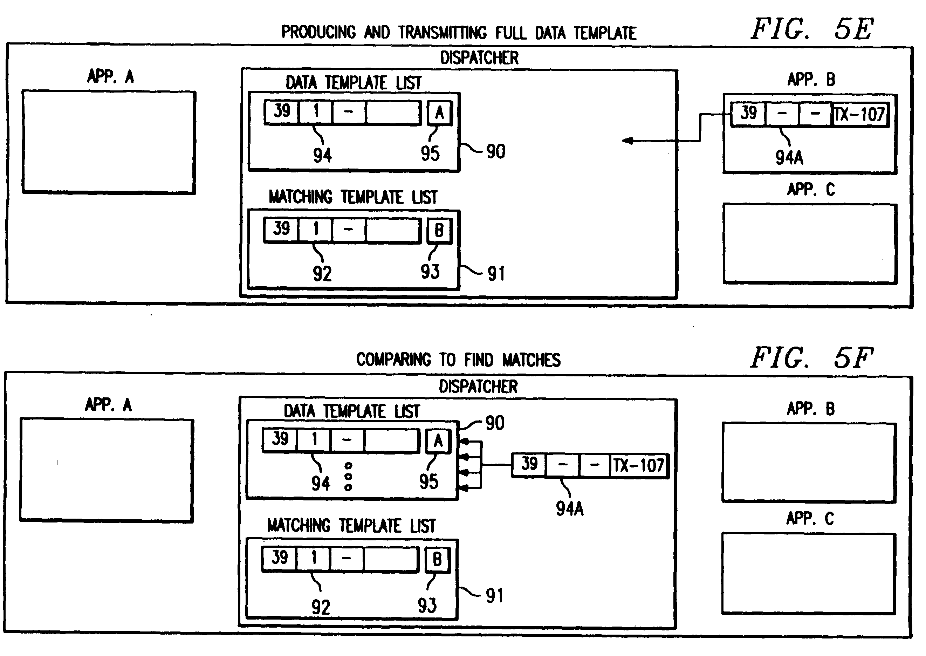

Referring now to FIGURE 5F, there is shown the step of "COMPARING TO FIND MATCHES". This process is the same as that described previously in reference to FIGURES 3A-3D and 4A-4D. The dispatcher program compares the template format code in the received template 94A with the template format codes in the stored templates in the list 90. This comparison produces a match which identifies the application A program as being a registered user for the received template 94A.

The dispatcher program determines whether any of the application programs are registered to receive the information produced in the generated template by determining whether the generated template matches the registered template submitted by an application program. A match is determined by using the Template-matching KEY field in each registered application template to determine which fields in the registered template must match the corresponding fields in the generated template in order for the two templates to be considered as matching. The information code in each template is included as one of the fields for which a match can be required. Normally the information code is always required for a match. However, it is possible to set the Template-matching KEY field to zero. This causes the key to act like a wild card, in that no fields within the two templates being compared are required to match, thereby allowing all templates to match a registered template which has a zero in the matching key field.

Referring now to FIGURE 5G, there is shown the step of "TRANSMITTING FULL DATA TEMPLATE". In this final step, the dispatcher program transmits the received template 94A to the application A program to complete the data transfer process. The application A program has received the data that it required and the application B program has generated that data. However, there has been no direct communication between the application programs A and B. Further, the application B program has generated only the amount of data which has been required by a user program. Thus, the application B program has operated in an efficient manner by not broadcasting templates that are not required.

The registration of a data-using program or a data-generating program with the dispatcher program can be initiated by many types of input commands. A user can input a command to a data-using program, which typically would have a window display, and command that program to register to receive data from the dispatcher program. Likewise, a user can input a command to a data-generating program and cause it to either immediately begin producing data templates and broadcasting them to the various dispatcher programs within a system or command a data-generating program to register with the dispatcher program. Input commands can also be received from other programs that are operating within the processor or in the system. For example, in a real-time industrial production system, such as a chemical plant, certain programs may monitor process parameters by use of the sensor 37 shown in FIGURE 1. Upon detection of a predetermined parameter, such a monitoring program can cause one or more application programs to register to receive data, register to generate data or to generate data for broadcast. Further, input commands to set up the various registrations can be produced in a set-up routine which is executed upon the initialization of the overall system or is executed during operation of the system by still some further input from an operator, other programs or outside sensors.

In view of the descriptions of the use of data-matching templates and template-matching templates as presented in FIGURES 3A-3D and 4A-4D, a further example is now presented, in reference to the window displays shown in FIGURE 1. In a sequence of operations a user can call up an application program to display log data for a well. For example, a user could establish a screen 54 for displaying a particular type of log data over a set depth range. The user determines the type of information he wishes to see but there is not yet any information for use by the application program which produces the window 54. The user inputs a first command to cause the application program to register with the dispatcher program to receive the required information. This is a step of registering a data-matching template. Such a template, for example, may be a registration to receive log data. The user then transfers the cursor to the window 50, which is a display map for various wells. If the user then positions the cursor within one of the well symbols and inputs a second command, the application program which produces the window then generates a template which contains log data for a selected well. This template is then transmitted to the dispatcher program which examines its registration list to determine if any previous application program has registered to receive log data. In the particular example, the application program for window 54 has made such a registration. The dispatcher program then transmits the template, which includes the log data, to the application program which produces window 54. Alternately, the template may only include a reference to the location of the actual log data, such as within a mass storage device, for example, a disk drive. The application program can then use the supplied location to retrieve the actual log data. The reference is an indicator for the location of the required data, such as an address within a mass storage medium. That application program then processes the received data to produce the log data display shown in the window 54. The user has thus caused the transfer of information between the concurrently operating application programs that produce the windows 50 and 54.

As shown in FIGURE 1, the user may have multiple display windows active at one time to cause different types of log data to be transmitted from the data-generating application program to each of the application programs which produce the different log displays. The user can further select different wells and cause the transmission of new templates to change the information displayed in the windows.

As a further example in reference to FIGURE 1, the user may establish a display which shows a pressure gauge, temperature gauge, position indicator or the like. The user could then cause one or more of these application programs which produce these windows to register with the dispatcher program to receive critical values or values from selected sensors. A further application program, which perhaps does not produce a window display, can monitor the processes through one or more of the sensors 37. This process monitoring application program can generate templates either selectively or periodically and transmit them to the dispatcher program. When the dispatcher program finds a match, by using the Template-matching KEY field, templates can then be transmitted to the application programs to produce a display of the required information. In this example the user does not initiate the operation of the data-generating application program, but, communication is provided between multiple, concurrently operating application programs by use of the dispatcher program in accordance with the present invention.

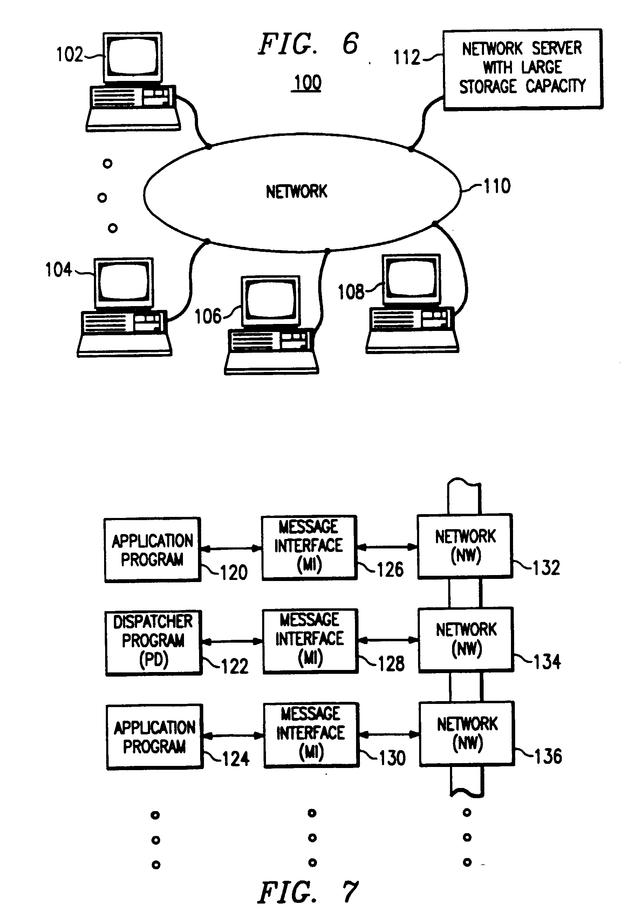

Referring now to FIGURE 6, there is schematically illustrated a network 100 implementation for the present invention. The network 100 includes a plurality of processors 102, 104, 106 and 108, each of which can be similar to the system 30 illustrated in FIGURE 1. These processors are each connected to a network interconnection 110. There is further included a network server 112 which is provided with a large storage capacity for providing access to data by each of the processors on the network.

In reference to FIGURES 3A-3D, FIGURES 4A-4D and FIGURES 5A-5G, there are described multiple application programs and a dispatcher program. In the network 100, each of these application and dispatcher programs can be located at anyone of the terminals or server on the network. At a particular processor, such as 104, there may be an application A, which requires data. The application A could register with a dispatcher program which may be physically located at the processor 108. Further, a data-generating application, such as B, may be located at the processor 102. The actual locations of the programs are irrelevant. The communication and data exchange between the application programs and the dispatcher is carried out across the network without regard to the location of the programs. All of the programs which produce windows on a single display must be working with the same copy of the dispatcher program. If there are multiple displays being operated on a network, there will be one copy of the dispatcher program for each display. In a typical application the dispatcher program will operate on the same work station as the corresponding display.

A representative network implementation consists of the TCP/IP protocol running under AIX ver. 2.2 utilizing an Ungermann-Bass network controller circuit which is connected to an ETHERNET cable.

As used herein, the term "computer system" means either a single stand-alone processor, as shown in FIGURE 1, or a a network of such processors as shown in FIGURE 6.

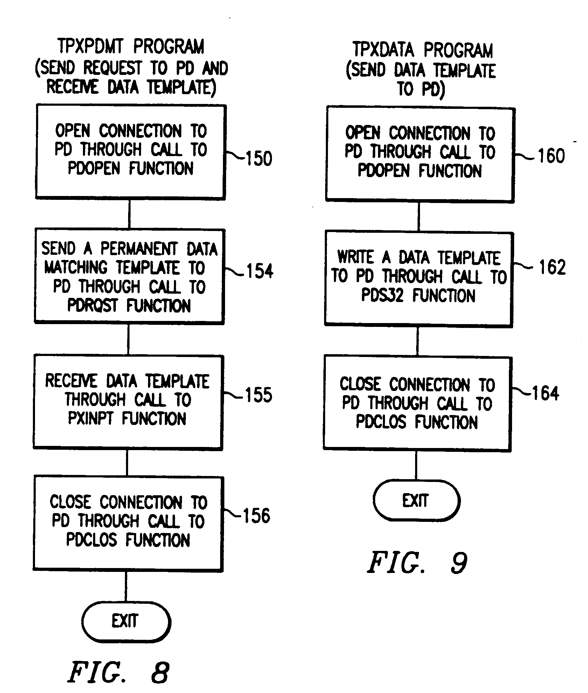

Referring now to FIGURE 7, there is illustrated the software interaction between the application and dispatcher programs in relation to the communication programs on a network. Application program 120, dispatcher program 122 and application 124 communicate respectively with message interface (MI) programs 126, 128 and 130. The message interface (MI) programs interact with network (NW) programs which themselves communicate across the network to the various processors, devices, storage and other programs. The message interface programs 126, 128 and 130 communicate respectively with network programs 132, 134 and 136, all of which network programs are interconnected through the network interconnection.

The message interface (MI) and network (NW) programs are prepared in conformance with the standards and definitions set forth in TCP/IP (Defense Communications Agency, DDN Protocol Handbook, Vol. 1-3 (NIC5004-6), Dec. 1985), which describes the selected network software implementation for the selected embodiment. However, it must be noted that there are numerous types and models of networks which could equally well embody the present invention and corresponding networking software would be utilized with these other networks.

In FIGURES 3A-3D and FIGURES 4A-4D, there are shown the steps of transmitting templates. Any of these steps of transmitting can be a transmission across the network between the processors.

The present invention includes data-using application programs, data-generating application programs and a dispatcher program for communicating data between the application programs. A given application program may be both a data-using program as well as a data-generating program. The data-using programs are registered with the dispatcher program to receive specific types of data. The data-generating programs produce templates of such data and transmit these to the dispatcher program which, in turn, supplies them to the registered data-using programs.

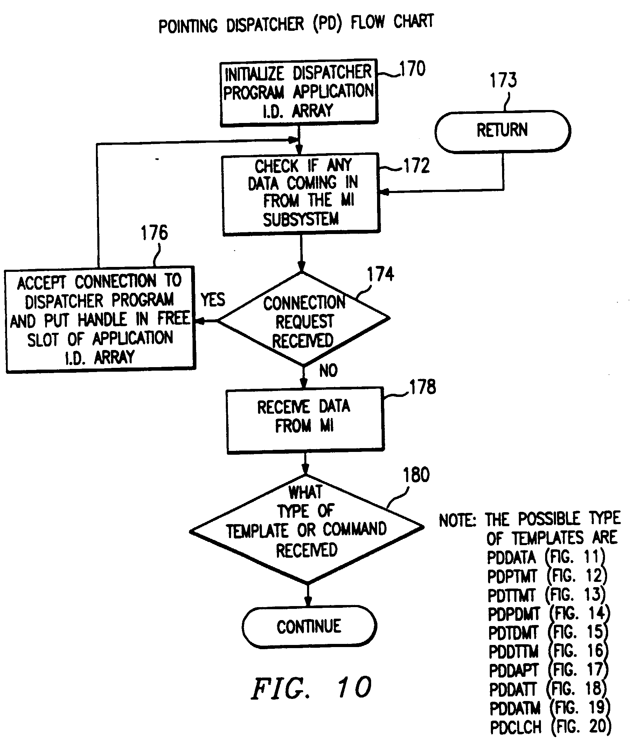

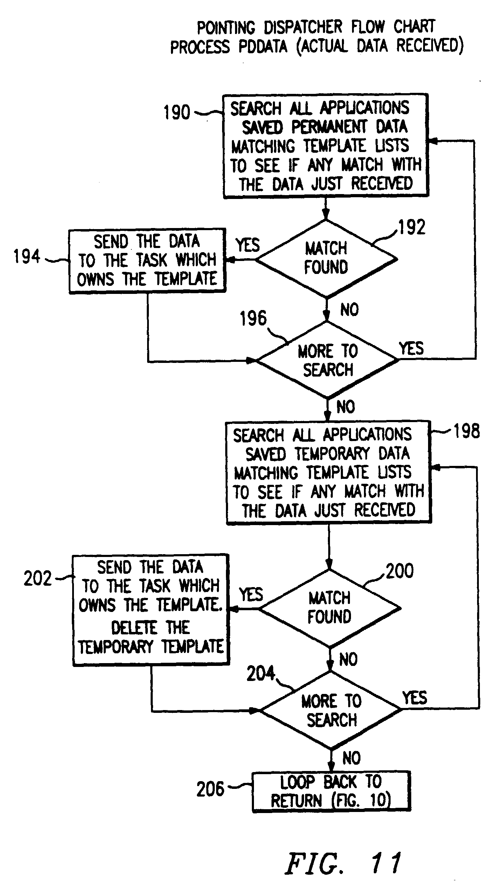

A further description of the present invention is directed to describing each of these three programs in detail. A data-using program which registers with the dispatcher program is described in a flow diagram in FIGURE 8. A data-generating application program which produces a data template is described in reference to FIGURE 9. The dispatcher program, also referred to as a pointing dispatcher (PD), is described in the flow diagrams illustrated in FIGURES 10-20.

These flow diagrams reference various program modules which serve to implement particular programs. A source code listing is presented in the Appendices for each of these referenced modules.

The following description also references various subroutines. These are described as follows:

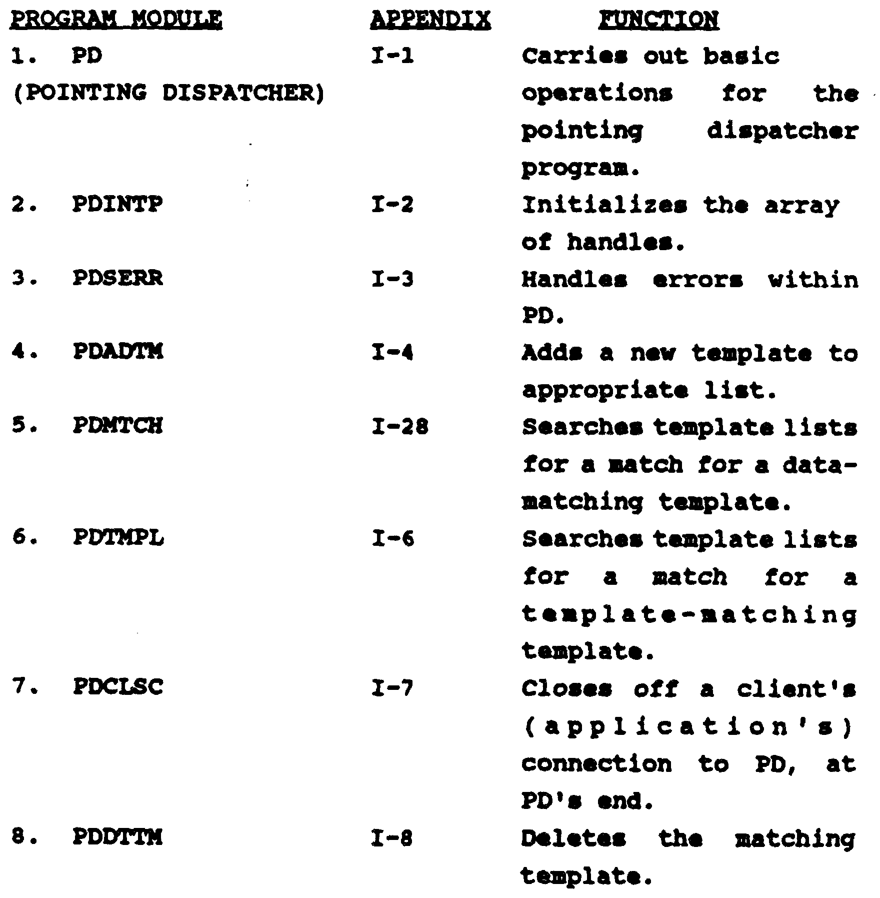

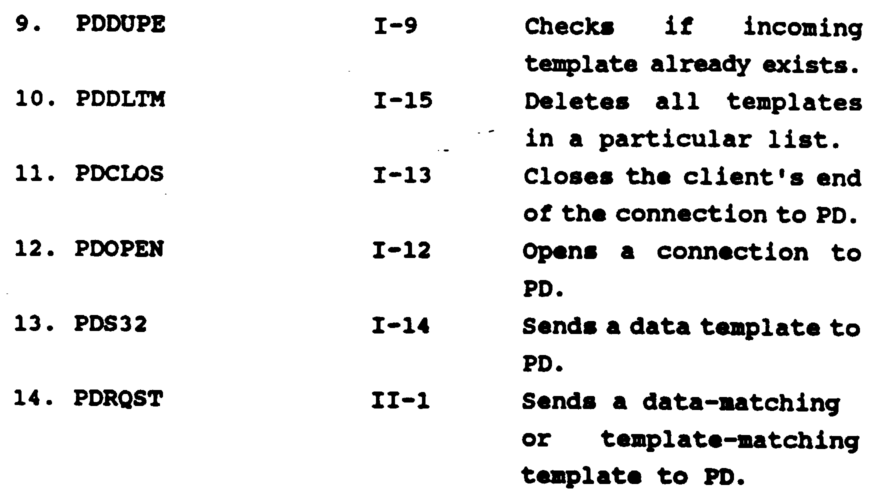

The procedure for registering a template by a data-using application program with the dispatcher program is described in the flow diagram shown in FIGURE 8. This corresponds to the steps shown in FIGURES 3A and 4A. The example application program is termed TPXPDMT. A source code listing of this program is presented in Appendix II-2. In block 150, a connection is established between the data-using program TPXDMT and the dispatcher program PD by making a call to the PDOPEN function. This function is described in a source listing presented in Appendix I-12. The process set forth in block 150 establishes a communication path between the application program and the dispatcher program.

In block 154, a permanent data-matching template is transferred from the application program TPXPDMT to the pointing dispatcher PD program by a call to the PDRQST function, which function is set forth as a code listing in Appendix II-1. A permanent data-matching template is one which is produced by a data-using application program that desires to receive all transmissions of the selected data until cancelled by the application program. An example is template 70 shown in FIGURE 3A. On the other hand, a temporary data-matching template is one in which the data-using application program desires to receive only one transmission of the selected data. A template of this type is cancelled after one data transmission to the registered program.

Following block 154, the program transitions to a functional block 155 wherein the dispatcher program receives the transmitted template by use of the subroutine PDR32. This subroutine is described as a source code listing in Appendix III-1.

In block 156, the connection between the data-using application TPXPDMP and the dispatcher program PD is terminated by placing a call to the PDCLOS function. The PDCLOS function is presented as a code listing in Appendix I-13.

The flow diagram for the operation carried out by a data-generating application program is shown in FIGURE 9. This corresponds to the steps shown in FIGURES 3B and 4B. This operation is initiated at a block 160. In this step a connection is established between the data-generating program, which is labeled as TPXDATA and the dispatcher program, which is termed PD. This is done by making a call to the PDOPEN function. Note that a source listing for the program module PDOPEN is provided at Appendix I-12. The purpose of the step set forth in block 160 is to establish a communication path between the application program and the dispatcher program.

In block 162 a "full" data template is transferred to the dispatcher program by making a call to the PDS32 function. An example of such a "full" template is 70A in FIGURE 3B. The template transmitted is one which includes both a template format code and data which is in the data field. A source listing for the PDS32 program is presented in Appendix I-14.

The connection between the application program and the dispatcher program is terminated through operations set forth in block 164. The termination of the connection is carried out by a call to the PDCLOS function, which is set forth in Appendix I-13. Thus, the procedure described in FIGURE 9 opens a connection, transmits a template to the dispatcher program and then closes the connection between the application program and the dispatcher program. The receipt and use of the data template by the dispatcher program is described in the flow diagrams shown in FIGURES 10-20.

A basic flow diagram for the pointing dispatcher (PD) program is presented in FIGURE 10. These operations correspond to the steps shown in FIGURES 3C, 3D and 4C, 4D. The code listing for the dispatcher program (PD) program is presented in Appendix I-1.

As described above, the dispatcher program stores a registration list for data-using application programs which have registered with the PD. There may also be other registration lists maintained by the dispatcher program. The registration lists which may be maintained by the dispatcher program are as follows:
1. A registration of permanent data-matching templates and the corresponding application identifiers.
2. A registration list of temporary data-matching templates and the corresponding application identifiers.
3. A registration list of permanent template-matching templates and the corresponding application identifiers.
4. A registration list of temporary template-matching templates and the corresponding application identifiers.

The first step in the PD program is shown at block 170. In this block an identification (ID) array for the dispatcher program is initialized. This is a process of setting aside a memory area for loading application program identifiers and template format codes. This array is initially set to be blank. In block 172, a check is made to determine if any data has been received from the message interface (MI) subsystem. This is a check to determine if any program has attempted to establish a connection to the PD program. When specific functions, described below, have been completed by the PD program, a return is made through entry point 173 to block 172. The answer to the check made in block 172 is carried out in question block 174. If a connection request has been received, a YES exit is taken to block 176. If a connection request has not been received, the NO exit is taken to a block 178.

If the YES exit is taken at question block 174, the dispatcher program accepts the connection it has received and it places the handle (identification) of the connected application program in a free slot of the application ID array. After this is completed, entry is next made to the block 172.

If the NO exit is taken from the question block 174, data, a template or command, has been received from the message interface (MI).

Following block 178, entry is made to a question block 180. An inquiry is made to determine the type of template or command which has been received by the dispatcher program. The potential types of templates and commands are listed in FIGURE 10 and are described below. Depending upon the template which is received, the dispatcher program proceeds to the appropriate flow diagram in the indicated figure. For example, if the template PDDATA is received, the PD program continues operation with the flow diagram shown in FIGURE 11. Flow diagrams in FIGURES 11-20 are described for each of the possible template types.

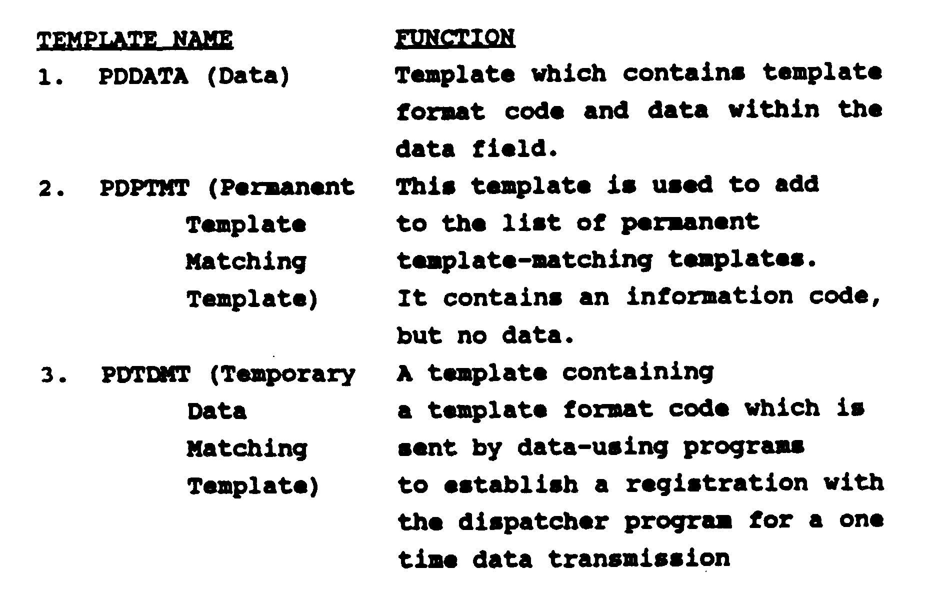

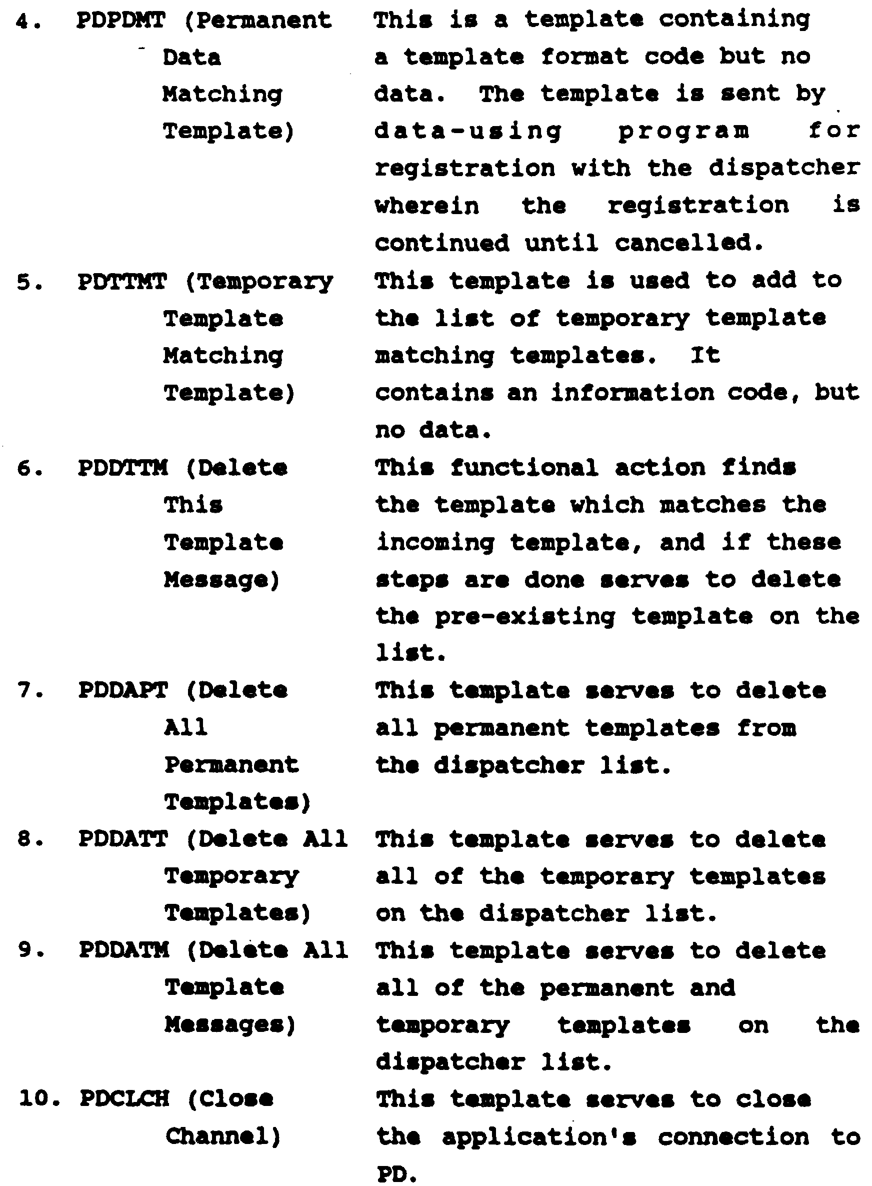

Referring now to FIGURE 11, there is shown the instance of the dispatcher program receiving actual data, namely a "filled" template. This is referred to as PDDATA. In this instance, a data-generating application program has generated a template containing actual data. This template is transmitted to the dispatcher program. In block 190, the dispatcher program first examines all entries in a permanent data-matching template list, which is maintained at the dispatcher program, to find if there is any match with the "filled" data template just received. This is a comparison of the fields in the received template with the fields for the stored templates, as indicated by the Template-matching KEY field for each of the stored templates. After the search is made, an inquiry block 192 is entered to answer the question of whether a match has been found. The YES exit leads to block 194 and the NO exit leads to a question block 196.

If the YES exit is taken from block 192 to block 194, the data template which was received is sent to the application program which has been identified in the match. This identified program is termed the owner of the template. After the data has been sent, the dispatcher program enters the question block 196.

If the NO exit is taken from the question block 192, a further question is asked in question block 196. The question in this block is to determine if there is more searching to be performed in the list of registered, permanent, templates. If the YES exit is taken, the dispatcher program returns to block 190 and repeats the process. If the NO exit is taken, the dispatcher program enters block 198.

In block 198, a search is performed over all of the temporary data-matching templates to determine if there is any match on this list. The exit from this block leads to a question block 200 to select the next action depending upon whether a match was found in the temporary data-matching template list. If a match is found, the YES exit is taken to a block 202 which carries out two actions. First, the received data template is sent to the task (application program) which registered the template with the dispatcher program. Next, the temporary template is deleted from the list.

Following block 202, the dispatcher program enters a question block 204 to determine if there is more remaining in the temporary data-matching template list to be searched. The block 204 is likewise entered if the NO exit is taken from the question block 200. If it is determined that there are more items in the temporary data-matching list to be searched, the YES exit is taken from block 204 which returns the program to block 198. If there is nothing more to search, the NO exit is taken to a block 206, and the dispatcher program is routed back to the return entry 173 shown in FIGURE 10 for the dispatcher program.

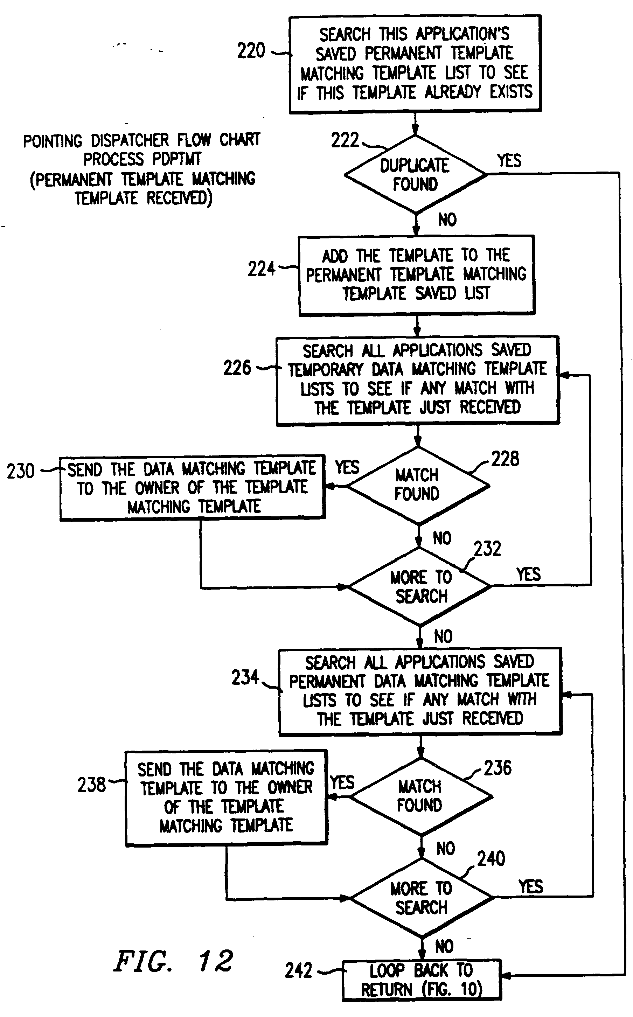

Referring now to FIGURE 12, there is shown a flow diagram for the receipt of a permanent template-matching template, which is identified as PDPTMT. In this procedure a data-generating application program transmits a permanent template-matching template to the dispatcher program for the purpose of registering to indicate that the data-generating application program is available to produce the data specified in the template. The objective of this procedure is to ensure that data is generated only if there exists application programs which are users of the generated data.

The first step in the process is to search the permanent template-matching template list within the dispatcher program to determine if this permanent template-matching template hos previously been registered by the sending application program. Block 220 leads to a question block 222 to determine if a duplicate has been found. If the answer is yes, the program is taken to the exit block 242 of the flow chart shown in FIGURE 12 and returned to the entry point 173 in FIGURE 10 because there is no need to register the template. If no duplicate has been found, the program takes the NO exit from the question block 222 to a block 224. The function carried out in functional block 224 is to add the template which has been received to the list of permanent template-matching templates. Associated with this template is an application program identifier.

Following block 224, a search is carried out as set forth in block 226. Note that at the dispatcher program, as discussed above, data-using application programs register in a list with the dispatcher program to receive a specified type of data. This can be either a temporary or permanent registration. Likewise, a data-generating program can register with the dispatcher program to indicate that it is available to generate a particular type of data. These registrations likewise can be either temporary or permanent. The present instance is a description of the registration of a permanent template-matching template by a data-generating program.

In block 226, there is a search of the temporary data-matching templates, which have been listed for application programs. These are the templates which have been registered by data-using application programs to indicate that data is required. From block 226, dispatcher program enters question block 228 to selectively respond if a match has been found. If such a match has been found, the YES exit is taken to block 230. Within block 230, the identified data-matching template is sent to the data-generating application program which submitted the permanent template-matching template noted in block 220. The data-matching template is taken from the list which is searched in block 226. The sending of the data-matching template to the data-generating application program notifies that program that it is to generate such templates because there is now an identified user.

If no match has been found, the program is transferred to a question block 232. Likewise, the exit from block 230 enters question block 232.

In the question block 232, an inquiry is made to determine if there is more searching to be done in the list of temporary data-matching templates. If there is more searching to be carried out, the YES exit is taken to return the dispatcher program to block 226. If the searching is complete, the NO exit is taken to a block 234.

In the block 234, a search is carried out for making a comparison to all of the saved permanent data-matching templates to determine if the field in the received template matches any of the codes in the stored templates, as indicated by the codes in the matching key fields. Following block 234, the program enters a question block 236 for routing the program depending upon the finding of a match. If such a match is found, the YES exit is taken from block 236 to block 238. Within the block 238, the data-matching template which was matched is sent to the data-generating program which originated the permanent template-matching template received in block 220. This notifies that data-generating program that there is a user for its data and that it should proceed with the generation of such data templates.

If no match is found for the question block 236, the NO exit is taken to a question block 240. This block is likewise entered following the operations in functional block 238. If there are more items to be searched in the list of permanent data-matching templates, the YES exit is taken to return the program to block 234. If there are no further items in the list to be searched, the NO exit is taken to block 242 which takes the program to the return entry 173 of the dispatcher program at FIGURE 10.

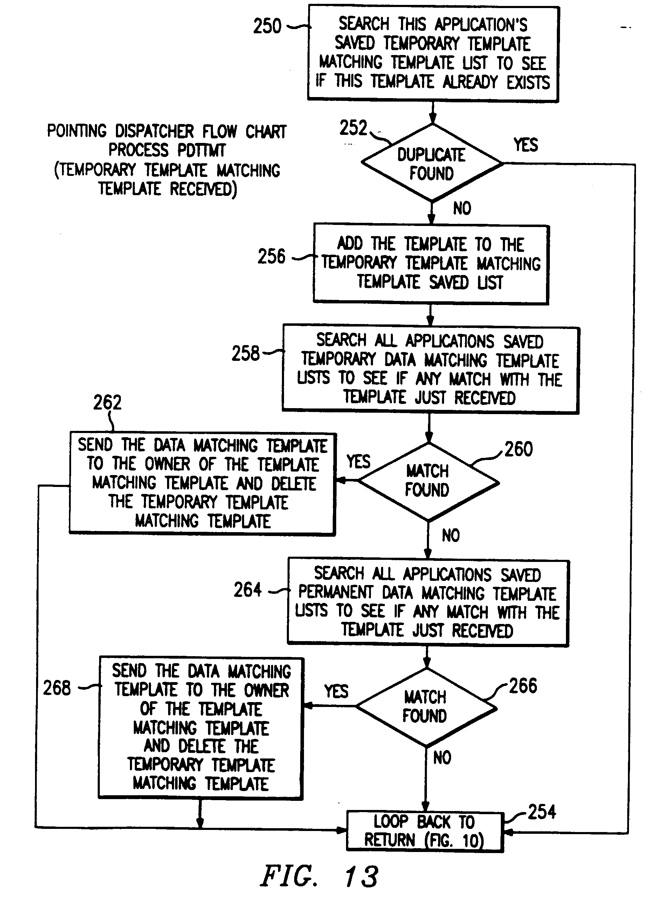

Referring now to FIGURE 13, there is shown a process which is much like that described in reference to FIGURE 12 but applies to a temporary, rather than permanent, template-matching template. In a block 250 the dispatcher program performs a search in the temporary template-matching template list to determine if the application program submitting the temporary template-matching template has previously made such a submission. Following block 250 there is entered a question block 252 to route the program dependent upon the finding of a duplicate. If a duplicate is found, the program is transferred through the YES exit to a block 254 which returns the program to the return entry 173 in FIGURE 10. If no duplicate is found, the NO exit is taken to a block 256. Within this block the dispatcher program adds the received template to the temporary template-matching template list, together with an application identifier for the application which submitted the template.

Following block 256, the dispatcher program enters a block 258. Within this functional block, the dispatcher program searches across all of the entries in the temporary data-matching template list to determine if any correspond to the template most recently received. Following block 258, the dispatcher program enters a question block 260 to route the program depending upon the answer to the question of a match. If a match is found, the YES exit is selected which leads to the block 262. If no match is found, the NO exit is selected which leads to the block 264. If entry is made to the block 262, the dispatcher program sends the data-matching template found in the match to the application program which submitted the temporary template-matching template. The sending of this template directs the identified data-generating program to produce the specified data template. A further step is to delete the temporary template-matching template from the saved list in which it was added during the operation set forth in block 256. Upon completion of these steps, the program exits from block 262 and enters the loop back block 254.

If the NO exit is selected from question block 260, the program enters a functional block 264. Within this block the dispatcher program searches the list of permanent data-matching templates to determine if there is any template match with the template received at the block 250. Upon completion of this search, the program transfers from block 264 to a question block 266. If a match is found during the search carried out in functional block 264, the YES exit is taken to a functional block 268. If no match is found, the NO exit is taken to the loop back block 254. Within the block 268, the dispatcher program sends the data-matching template located in the search set forth in block 264 to the application program (owner) which submitted the template-matching template to block 250. The transmission of this data-matching template indicates to the originating data-generating application program that there is in existence a data-using application program which requires the data that is produced by the submitting application program. Also within block 268, the temporary template-matching template is deleted from the list because such a temporary template is used for only one instance.

Upon completion of the functions set forth in block 268, the program exits to the loop back block 254 which returns the program to the return entry 173 in the basic dispatcher program flow diagram set forth in FIGURE 10.

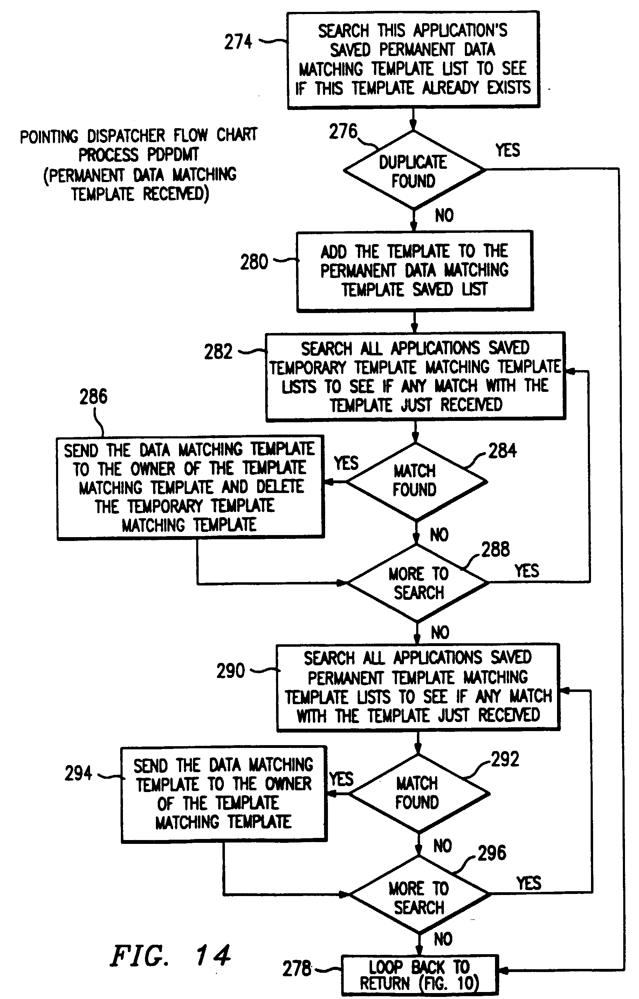

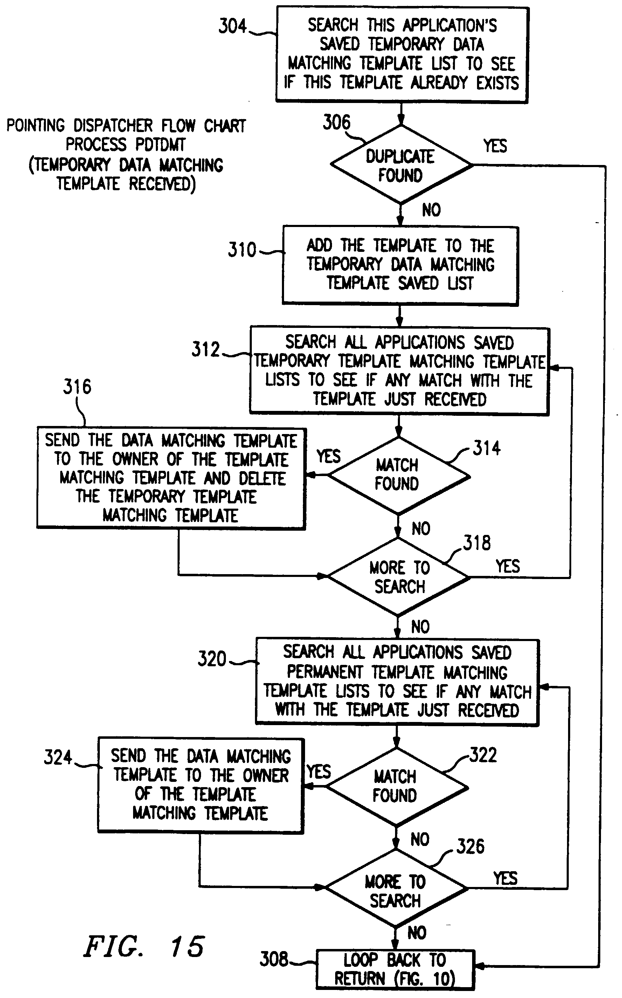

The flow diagrams that illustrate the operation of the dispatcher program for the process of registering permanent and temporary data-matching templates are described in FIGURES 14 and 15, respectively. This is a process wherein a data-using application program registers with the dispatcher program to receive one or all templates of a specified type which are produced by the data-generating, application programs. A temporary registration provides the data-using application program with one data template only and the registration at the dispatcher program is cancelled after the one template is sent to the registered application program. With a permanent registration, all data templates of the specified type are provided to the registered application program until the registration is cancelled.

Referring now to FIGURE 14, there is described a process carried out by the dispatcher program upon receipt of a permanent data-matching template. This is termed process PDPDMT. Upon receipt of a permanent data-matching template, in block 274, the function is carried out of checking that application's corresponding saved list to determine if the submitted template has already been registered. From block 274 the program proceeds to a question block 276. If a duplicate is found, the YES exit is taken which proceeds to the block 278 that returns the program to the entry point 173 in FIGURE 10. If no duplicate is found, the NO exit is taken from block 276 to a functional block 280.

Within the functional block 280, the dispatcher program adds the received template to the saved list of permanent data-matching templates together with the application identifier for the transmitting application program.

The dispatcher program transfers from the functional block 280 into a functional block 282 where it searches the entire list of saved temporary template-matching templates to determine if any of them match format codes with the template just received. This is a check of matching templates to determine if there are any data-generating programs which have registered to indicate that they are prepared to produce the data requested by the application program which submitted the permanent data-matching template. From the functional block 282, the program proceeds to the question block 284. If such a match of the permanent data-matching template with a temporary template-matching template is made within block 282, the YES exit is taken to a functional block 286. Within the functional block 286, the dispatcher program sends the data-matching template found in block 282 to the data-generating application program which previously registered that template. This serves to notify that application program that it should initiate generation of "filled" data templates since there is now a registered user for such templates. But, since the registration of the template-matching template is only temporary, that temporary template is deleted.

A question block 288 is entered both from the NO exit of question block 284 and the output of functional block 286. Within the question block 288, the dispatcher program determines if there is more searching to be done within the temporary template-matching template list. If there is more to be searched, the YES exit is taken which returns the program to the functional block 282. If there is nothing more to search in this list, the program is directed to a functional block 290.

Within the block 290, the dispatcher program searches the list of saved permanent template-matching templates to determine if there is any template function code match with the received permanent data-matching template. From block 290, the program proceeds to a question block 292. If a match is found from the search performed in block 290, the YES exit is taken to a functional block 294. Within functional block 294, the dispatcher program performs the operation of sending the data-matching template found in the search performed in block 290 to the data-generating application program corresponding to the application identifier for the template-matching template. The transmission of this data-matching template serves to notify that data-generating application programs that it should proceed with the generation of "filled" data templates since there is now a registered user for such templates.

A question block 296 is entered if no match is found in the question block 292 and the NO exit is taken from block 292, or if the function 294 is carried out. Within the block 296, an inquiry is made to determine if there is more to be searched in the permanent template-matching template list set forth in block 290. If there is additional material to be searched, the YES exit is taken from block 296 to the functional block 290. If the searching has been completed, the NO exit is taken to the block 278 which returns the program to the entry point 173 of the dispatcher program in FIGURE 10.

The final registration function of the dispatcher program is described in reference to FIGURE 15. This flow diagram describes the operations that are performed when the dispatcher program receives a temporary data-matching template from a data-using application program. Such a template is submitted to the dispatcher program when a data-using application program requires only one "filled" data template. The first functional operation is carried out in block 304. The dispatcher program searches the temporary data-matching template list to determine if the submitting data-using application has previously registered the same template that was received. A routing inquiry is made in a question block 306 following functional block 304. If a duplicate is found, the YES exit is taken to a functional block 308 which routes the program back to the entry point 173 of the dispatcher program flow diagram illustrated in FIGURE 10.

If no duplicate is found in the question block 306, the NO exit is taken to a functional block 310. Within this block, the dispatcher program adds the received template to the list of temporary data-matching templates together with the application identifier corresponding to the transmitting data-using application program.

The dispatcher program proceeds from functional block 310 to a functional block 312. Within the block 312, the dispatcher program searches the list of saved temporary template-matching templates for all application programs to determine if there is any match with the template just received. The program proceeds to a question block 314 to route the program depending upon the finding of a match. If such a match is found, the dispatcher program proceeds to a functional block 316 through the YES exit, but if no match is found, the program proceeds through the NO exit to a further question block 318. Within the functional block 316, the dispatcher program sends the data-matching template received in block 304 to the identified application program which registered the temporary template-matching template that was identified in the search performed in functional block 312. The sending of this template to the registered data-generating application program informs that program that it should proceed with the generation of a "filled" data template because there is now an identified user of the data that it produces. Within block 316, the dispatcher program proceeds to delete the temporary matching template identified in block 312 because temporary templates require only one response and it should not be used again.

If no match is found within the question block 314 or the functions are accomplished within block 316, the dispatcher program proceeds to a question block 318. Within this block, a determination is made as to whether more searching should be performed within the temporary template-matching template list. If more searching is required, the YES exit is taken back to the functional block 312. If no further searching is required, the dispatcher program takes the NO exit to a functional block 320.

Within the functional block 320, the dispatcher program proceeds to search the list of permanent template-matching templates for all application programs to determine if there is any template match with the temporary data-matching template received at block 304. From the functional block 320, the dispatcher program proceeds to a question block 322. If a match is found, the program proceeds through the YES exit to a functional block 324, but if no match is found, the program takes the NO exit to a further question block 326. Within the functional block 324, the dispatcher program sends the received data-matching template to the identified data-generating application program (owner) of the template-matching template that was identified by the match found in the search performed within functional block 320. The sending of this data-matching template to the data-generating application program informs the program that it should proceed with the generation of its particular "filled" data template since there is now an identified user of that data. This process continues until cancelled because this is a permanent template.

Within the question block 326, the dispatcher program determines if there is more searching to be performed within the list of permanent template-matching templates. If more searching is to be performed, the YES is taken back to the functional block 320. If the searching is complete, the dispatcher program takes the NO exit to the functional block 308 which returns the program back to the return entry point 173 for the dispatcher program in FIGURE 10.

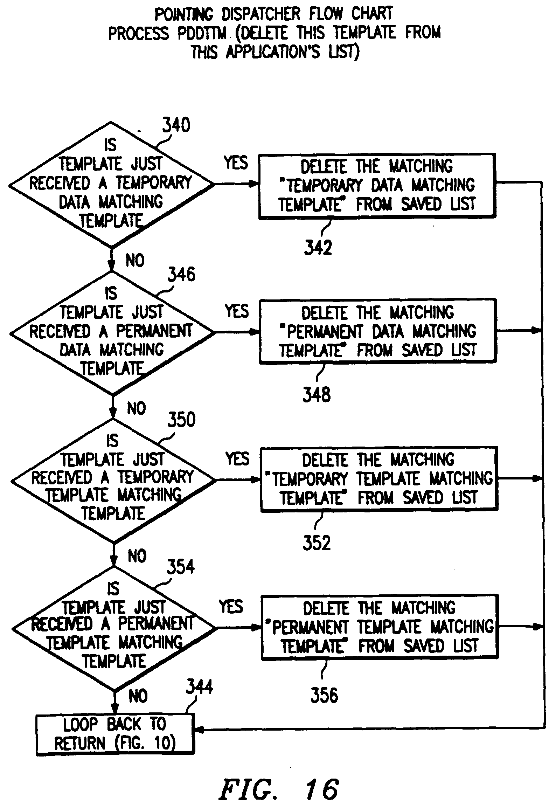

The immediately preceding flow diagrams for the dispatcher program have described processes for the registration of various types of templates. FIGURES 16-19 describe the dispatcher operations for deleting specific templates or groups of templates. These deletion processes are required so that the communication function of the present invention can be flexible and dynamic.

Referring now to FIGURE 16, there is described a process for the deletion of specific templates by an application program. Application programs can generate both temporary and permanent templates. They can also generate "data-matching" and "template-matching templates". There are thus four possible templates and there are four corresponding template lists within the dispatcher program. In FIGURE 16, there is described the process for deleting a specific template having any one of the four types. The procedure described in FIGURE 16 is initiated upon receipt of a deletion command and a template. In question block 340, an examination is made to determine if the received template is a "temporary data-matching template". If it is, the YES exit is taken to a functional block 342 wherein the dispatcher program deletes the received temporary data-matching template from the corresponding saved list. Following block 342, the dispatcher program proceeds to a block 344 which returns the program to the entry point 173 for the dispatcher program flow diagram shown in FIGURE 10.

If the NO exit is taken from the question block 340, a question block 346 is entered to determine if the received template is a "permanent data-matching template". If such a template is received, the YES exit is taken from block 346 to a functional block 348. Within the block 348, the dispatcher program deletes the received permanent data-matching template from the corresponding saved list. The dispatcher program exits from functional block 348 to the loop back block 344 which returns the program to the entry point 173 in FIGURE 10.

If the NO exit is taken from block 346, the dispatcher program enters a question block 350. This block determines if the received template is a "temporary template-matching template". If this is true, the YES exit is taken to a functional block 352 wherein the dispatcher program deletes the received temporary template-matching template from the saved list. The dispatcher program then proceeds to the loop back functional block 344.

If the NO exit is taken from the question block 350, the dispatcher program enters the question block 354. The function within this block determines if the received template is a "permanent template-matching template". If this is true, the YES exit is taken to a functional block 356 wherein the dispatcher program deletes the received permanent template-matching template from the corresponding saved list and then returns the program to the loop back block 344. If the NO exit is taken from the question block 354, the dispatcher program is taken to the loop back functional block 344 where the program is returned to the entry point 173 within FIGURE 10.

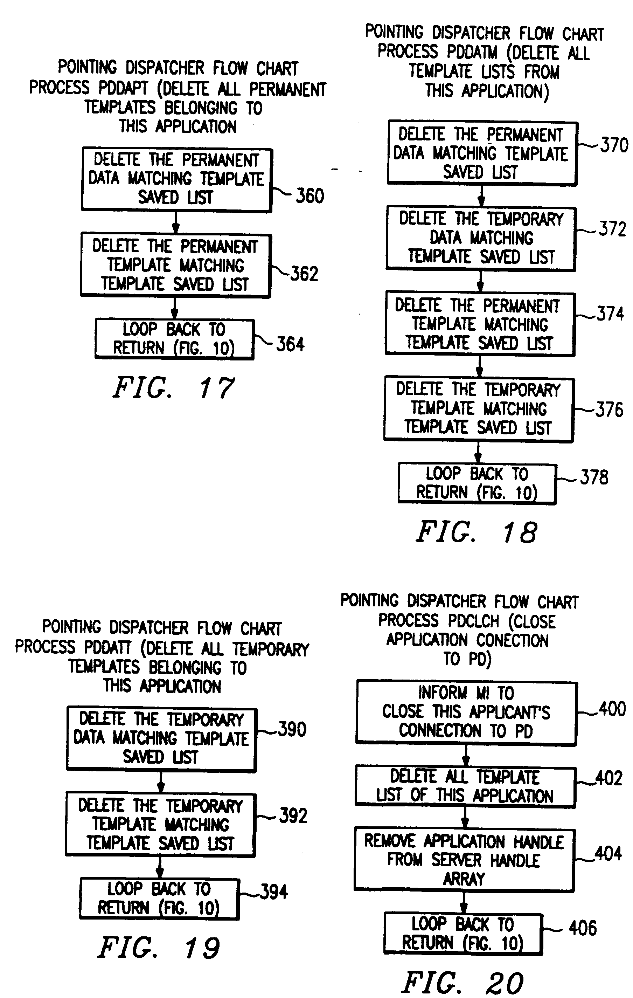

A group deletion of templates by the dispatcher program is now described in reference to FIGURE 17. The process described in this flow diagram deletes all permanent templates for a specific application program. Upon receipt of the process PDDAPT by the dispatcher program, the functional block 360 is entered. Within this functional block, a dispatcher program deletes all permanent data-matching templates from the saved list for the submitting application program. The dispatcher program then proceeds to functional block 362 and deletes all the permanent template-matching templates from the saved list for the submitting application. Thus, all permanent templates of both the data-matching type and the template-matching type are deleted for the particular application program which made the submission to the dispatcher program. Finally, the dispatcher program exits from functional block 362 to a functional block 364 which returns the dispatcher program to the entry point 173 in FIGURE 10.

Referring now to FIGURE 18 for the dispatcher program, the process shown herein serves the function of deleting all template lists for a specified application program. This is the process which is termed PDDATM. Upon receipt of this process from an application program, the dispatcher program enters a first functional block 370. Within this functional block, the dispatcher program deletes all of the permanent data-matching templates from the corresponding list for the submitting application program.

From the functional block 370, the dispatcher program proceeds to the functional block 372 where it deletes all of the temporary data-matching templates from the corresponding saved list for the submitting application program.

From block 372, the dispatcher program proceeds to functional block 374 wherein it deletes all of the permanent template-matching templates from the corresponding saved list for the application program which submitted the request to make the deletions.

From the functional block 374, the dispatcher program proceeds to functional block 376 wherein it deletes all of the temporary template-matching templates in the saved list for the submitting application program. At this point all of the templates for a particular application program have been deleted from the lists within the dispatcher program. Finally, the dispatcher program proceeds to the functional block 378 which returns the program to the entry point 173 in FIGURE 10.

Referring now to FIGURE 19, there is shown the process for deleting only the temporary templates for a particular application program. This process is termed PDDATT. In the first functional block 390, the dispatcher program deletes all of the temporary data-matching templates for the submitting application program from the corresponding list stored within the dispatcher program. The dispatcher program then proceeds to functional block 392 where it deletes all of the temporary template-matching templates from the corresponding list for the submitting application program. Finally, the dispatcher program proceeds to a functional block 394 which returns the program back to the entry point 173 within FIGURE 10.

The final function described for the dispatcher program is shown in FIGURE 20. This process, termed PDCLCH, closes the connection between an application program and the dispatcher program. Within a functional block 400, the dispatcher program informs the message interface (MI) to close the communication connection with the dispatcher program (PD). The MI is the interface between the dispatcher program as well as the application programs, and the networking software. This is shown in reference to FIGURE 7.

From functional block 400, the dispatcher program proceeds to functional block 402 wherein it deletes all of the templates for the submitting application from all lists maintained at the dispatcher program.

Following functional block 402, the dispatcher program proceeds to functional block 404 wherein the application handle (identification of the submitting application program), is deleted from the array that was initially set up by the dispatcher program in functional block 170 shown in FIGURE 10. Finally, the dispatcher program is transferred to a block 406 which loops the program back to the entry point 173 in FIGURE 10.

The flow diagram for PDCLCH shown in FIGURE 20 differs from that for PDDATM shown in FIGURE 18. In FIGURE 18, the application handle is maintained and the application program can return and register new templates in the lists at the dispatcher program. But in the flow diagram shown in FIGURE 20, the application handle has been deleted and must be reestablished before there can be any registration of templates by the application program.

Referring now to FIGURE 21, there is shown a structure chart for the pointing dispatcher (PD) program. Each of the subroutines shown in this chart is provided as a listing in Appendix I.

FIGURE 22 is a structure chart for a program TPXPDMT which is a program that registers with the dispatcher program to receive data. Each of the subroutines that make up this program are presented as code listings in Appendices I or II.

In FIGURE 23 there is shown a structure chart for the program TPXDATA. This is a data-generating program which provides information to the pointing dispatcher program. Each of the subroutines shown in this structure chart is presented as a code listing in Appendices I, II or III.

In summary, the present invention provides a novel, rapid and efficient method for communicating information between independent, but concurrently operating, programs within a computer system.

Although one embodiment of the invention has been illustrated in the accompanying drawings and described in the foregoing Detailed Description, it will be understood that the invention is not limited to the embodiment disclosed, but is capable of numerous rearrangements, modifications and substitutions without departing from the scope of the invention.

## Claims

1. A method for transferring information between multiple programs (A,B,C) operating concurrently in a computer system, the method comprising the steps of:
registering with a dispatcher program to produce a list (82) comprising one or more information codes (70, 74, 72, 75, 76) and an application program identification (85, 86, 87, 88, 89) for each of one or more application programs, each of said information codes representing a specific type or collection of said information, each application program identification in said list associated with at least one of said information codes,
producing selected information and a corresponding information code by an application program,
transmitting said selected information and corresponding information code to said dispatcher program,
comparing said information code which corresponds to said selected information to the information codes in said list to find matches which identify one or more of said application programs which are registered in said list to receive the type or collection of information indicated by said information code which corresponds to said selected information, and
transmitting at least said selected information to each of said one or more identified application programs.

2. A method for transferring information between multiple programs operating concurrently in a computer system as recited in Claim 1 wherein said selected information is an indicator for accessing other information to be utilized by said one or more identified application programs and said one or more identified application programs retrieve said other information by use of said indicator.

3. A method for transferring information between multiple programs operating concurrently in a computer system as recited in Claim 1 wherein said selected information is information which is utilized directly by said one or more identified application programs.

4. A method for transferring information between multiple programs operating concurrently in a computer system as recited in Claim 1 wherein at least one of said steps of transmitting includes transmission across a network which interconnects a plurality of processors within said computer system.

5. A method for transferring information between multiple programs operating concurrently in a computer system as recited in Claim 1 wherein said registered information code corresponding to the transmitted selected information is temporary and the method including the step of deleting the registered information code corresponding to said selected information from said list for each of said identified application programs after said selected information has been transmitted to each of said identified application programs.

6. A method for transferring information between multiple programs operating concurrently in a computer system as recited in Claim 1 wherein said registered information code corresponding to the transmitted selected information is designated as permanent, and the steps of producing selected information, transmitting said selected information, comparing said information code and transmitting at least said selected information are sequentially repeated for multiple occurrences to convey additional information to the identified application programs.

7. A digital computer having input and output devices, a memory, storage and a central processing unit, the computer programmed to operate in accordance with the methods set forth in any one of Claims 1, 2, 3, 4, 5 or 6.

8. A network of interconnected digital computers each having input and output devices, a memory, storage and a central processing unit, the computers in the network programmed to operate in accordance with the methods set forth in any one of Claims 1, 2, 3, 4, 5 or 6.

9. A method for transferring information between multiple programs operating concurrently in a computer system as set forth in any one of Claims 1 to 6 wherein the computer system includes an input device and an output device for communicating with a user, and further comprising the step of:
producing a window display at said output device for each of a plurality of application programs, wherein a user communicates with the window application programs by use of a corresponding window display by means of said input device,

10. A digital computer having input and output devices, a memory, storage and a central processing unit, the computer programmed to operate in accordance with the method set forth in Claim 9.

11. A network of interconnected digital computers each having input and output devices, a memory, storage and a central processing unit, the computers in the network programmed to operate in accordance with the method set forth in Claim 9.

## Patentansprüche

1. Verfahren zum Transferieren von Daten zwischen mehreren Programmen (A, B, C), die in einem Computersystem gleichzeitig ablaufen, wobei das Verfahren die folgenden Schritte aufweist:
Eintragen mit einem Abwicklungsprogramm, um eine Liste (82) zu erstellen, die einen oder mehrere Datencode (70, 74, 72, 75, 76) und eine Anwendungsprogramm-ldentifizierung (85, 86, 87, 88, 89) für jedes von einem oder mehreren Anwendungsprogrammen aufweist, wobei jeder der Datencode einen spezifischen Typ oder eine Sammlung der Daten repräsentiert, und jede Anwendungsprogramm-ldentifizierung in der Liste mit mindestens einem der Datencode verknüpft ist,
Erzeugen ausgewählter Daten und eines entsprechenden Datencodes durch ein Anwendungsprogramm,
Übermitteln der ausgewählten Daten und des entsprechenden Datencodes nach dem Abwicklungsprogramm,
Vergleichen des Datencodes, der der ausgewählten Daten entspricht, mit den Datencoden in der Liste, um Übereinstimmungen zu finden, die eines oder mehrere der Anwendungsprogramme, die in dieser Liste aufgeführt sind, identifizieren, um den Typ oder die Sammlung der Daten zu erhalten, die durch den Datencode, der der ausgewählten Daten entspricht, bezeichnet wird, und
Übermitteln von mindestens der ausgewählten Daten an jedem der einen oder mehreren identifizierten Anwendungsprogramme.

2. Verfahren zum Transferieren von Daten zwischen mehreren Programmen, die in einem Computersystem gleichzeitig ablaufen, gemäß Anspruch 1, wobei die ausgewählten Daten ein Indikator für den Zugang zu weiteren, von den identifizierten Anwendungsprogrammen zu verwendenden Daten ist, und das eine oder die mehreren identifizierten Anwendungsprogramme durch Verwendung des Indikators die weiteren Daten wiederauffinden.

3. Verfahren zum Transferieren von Daten zwischen mehreren Programmen, die in einem Computersystem gleichzeitig ablaufen, gemäß Anspruch 1, wobei die ausgewählten Daten Daten sind, die von dem oder den mehreren identifizierten Anwendungsprogrammen direkt verwendet werden.

4. Verfahren zum Transferieren von Daten zwischen mehreren Programmen, die in einem Computersystem gleichzeitig ablaufen, gemäß Anspruch 1, wobei mindestens einer der Übertragungsschritte die Übertragung über ein Netz umfaßt, das eine Vielzahl von Prozessoren innerhalb des Computersystems miteinander verbindet.

5. Verfahren zum Transferieren von Daten zwischen mehreren Programmen, die in einem Computersystem gleichzeitig ablaufen, gemäß Anspruch 1, wobei der eingetragene Datencode, der der übertragenen ausgewählten Daten entspricht, ein temporärer Code ist, und das Verfahren den Schritt zum Streichen des eingetragenen Datencodes, der der ausgewählten Daten entspricht, aus der Liste der identifizierten Anwendungsprogramme umfaßt, nachdem die ausgewählten Daten nach jedem der identifizierten Anwendungsprogramme übertragen wurden.

6. Verfahren zum Transferieren von Daten zwischen mehreren Programmen, die in einem Computersystem gleichzeitig ablaufen, gemäß Anspruch 1, wobei der eingetragene Datencode, der der übertragenen ausgewählten Daten entspricht, als permanent bezeichnet wird, und die Schritte zum Erzeugen von ausgewählter Daten, Übermitteln der ausgewählten Daten, Vergleichen des Datencodes, und Übermitteln von mindestens der ausgewählten Daten in aufeinanderfolgender Weise für mehrere Ereignisse wiederholt werden, um zusätzliche Daten zu den identifizierten Anwendungsprogrammen zu übersenden.

7. Digitaler Computer, der Eingabe- und Ausgabevorrichtungen, einen Internspeicher, Externspeicherung und eine Zentraleinheit hat, wobei der Computer so programmiert ist, daß er entsprechend den Verfahren arbeitet, die in irgendeinem der Ansprüche 1, 2, 3, 4, 5 oder 6 dargelegt sind.

8. Netz von miteinander verbundenen digitalen Computern, von denen jeder Eingabe- und Ausgabevorrichtungen, einen Internspeicher, Externspeicherung und eine Zentraleinheit hat, wobei die Computer in dem Netz so programmiert sind, daß sie entsprechend den Verfahren arbeiten, die in irgendeinem der Ansprüche 1, 2, 3, 4, 5 oder 6 dargelegt sind.

9. Verfahren zum Transferieren von Daten zwischen mehreren Programmen, die in einem Computersystem gleichzeitig ablaufen, gemäß irgendeinem der Ansprüche 1 bis 6, wobei das Computersystem eine Eingabevorrichtung und eine Ausgabevorrichtung umfaßt, um mit einem Benutzer zu kommunizieren, wobei das Verfahren weiterhin die folgenden Schritte aufweist:
Erzeugen einer Fensteranzeige bei der Ausgabevorrichtung für jedes einer Vielzahl von Anwendungsprogrammen, wobei ein Benutzer unter Verwendung einer entsprechenden Fensteranzeige mittels der Eingabevorrichtung mit den Fensteranwendungsprogrammen kommuniziert.

10. Digitaler Computer, der Eingabe- und Ausgabevorrichtungen, einen Internspeicher, Externspeicherung und eine Zentraleinheit hat, wobei der Computer so programmiert ist, daß er entsprechend dem in Anspruch 9 dargelegten Verfahren arbeitet.

11. Netz von miteinander verbundenen digitalen Computern, von denen jeder Eingabe- und Ausgabevorrichtungen, einen Internspeicher, Externspeicherung und eine Zentraleinheit hat, wobei die Computer in dem Netz so programmiert sind, daß sie entsprechend dem in dem Anspruch 9 dargelegten Verfahren arbeiten.

## Revendications

1. Procédé de transfert d'informations entre plusieurs programmes (A, B, C) fonctionnant concurremment dans un système d'ordinateurs, le procédé comprenant les étapes suivantes :
l'enregistrement, avec un programme distributeur destiné à former une liste (82) comprenant un ou plusieurs codes d'information (70, 74, 72, 75, 76) et une identification (85, 86, 87, 88, 89) de programme d'application pour chacun d'un ou plusieurs programmes d'application, chacun des codes d'information représentant un type particulier ou une collection d'informations, chaque identification de programme d'application de la liste étant associée à l'un au moins des codes d'information,
la production d'informations choisies et d'un code correspondant d'information par un programme d'application,
la transmission des informations choisies et du code correspondant d'information au programme distributeur,
la comparaison du code d'information qui correspond à l'information choisie aux codes d'information de la liste pour la détermination d'un accord qui identifie un ou plusieurs des programmes d'application qui sont enregistrés dans la liste pour la réception du type ou de la collection d'informations indiqué par le code d'information qui correspond à l'information choisie, et
la transmission au moins des informations choisies à chacun des programmes identifiés d'application.

2. Procédé de transfert d'informations entre plusieurs programmes fonctionnant concurremment dans un système d'ordinateurs selon la revendication 1, dans lequel des informations choisies forment un indicateur d'accès à d'autres informations destinées à être utilisées par les programmes identifiés d'application, et les programmes identifiés d'application ont accès aux autres informations par utilisation de l'indicateur.

3. Procédé de transfert d'informations entre plusieurs programmes fonctionnant concurremment dans un système d'ordinateurs selon la revendication 1, dans lequel les informations choisies sont des informations qui sont directement utilisées par les programmes identifiés d'application.

4. Procédé de transfert d'informations entre plusieurs programmes fonctionnant concurremment dans un système d'ordinateurs selon la revendication 1, dans lequel l'une au moins des étapes de transmission comprend la transmission par un réseau d'interconnexion de plusieurs processeurs dans le système d'ordinateurs.

5. Procédé de transfert d'informations entre plusieurs programmes fonctionnant concurremment dans un système d'ordinateurs selon la revendication 1, dans lequel le code d'information enregistré correspondant aux informations choisies transmises est temporaire, et le procédé comprend l'étape de suppression du code d'information enregistré correspondant aux informations choisies de la liste pour chacun des programmes identifiés d'application après que les informations choisies ont été transmises à chacun des programmes d'application identifiés.

6. Procédé de transfert d'informations entre plusieurs programmes fonctionnant concurremment dans un système d'ordinateurs selon la revendication 1, dans lequel le code d'information enregistré correspondant aux informations choisies transmises est désigné sous forme permanente, et les étapes de production d'informations choisies, de transmission des informations choisies, de comparaison du code d'information et de transmission des informations choisies au moins sont répétées successivement pour plusieurs apparitions afin que des informations supplémentaires soient transférées vers les programmes identifiés d'application.

7. Ordinateur numérique comprenant des dispositifs d'entrée et de sortie, une mémoire, une mémoire de masse et une unité centrale de traitement, l'ordinateur étant programmé afin qu'il fonctionne par mise en oeuvre des procédés selon l'une quelconque des revendications 1, 2, 3, 4, 5 ou 6.

8. Réseau d'ordinateurs numériques interconnectés ayant chacun des dispositifs d'entrée et de sortie, une mémoire, une mémoire de masse et une unité centrale de traitement, les ordinateurs du réseau étant programmés afin qu'ils fonctionnent par mise en oeuvre des procédés selon l'une quelconque des revendications 1, 2, 3, 4, 5 ou 6.

9. Procédé de transfert d'informations entre plusieurs programmes fonctionnant concurremment dans un système d'ordinateurs selon l'une des revendications 1 à 6, dans lequel le système d'ordinateurs comprend un dispositif d'entrée et un dispositif de sortie destinés à communiquer avec un utilisateur, le procédé comprenant en outre l'étape de production d'un affichage sur une fenêtre du dispositif de sortie pour chacun de plusieurs programmes d'application, et un utilisateur communique avec les programmes d'application de la fenêtre par utilisation d'un affichage correspondant de fenêtre à l'aide du dispositif d'entrée.

10. Ordinateur numérique ayant des dispositifs d'entrée et de sortie, une mémoire, une mémoire de masse et une unité centrale de traitement, l'ordinateur étant programmé afin qu'il fonctionne par mise en oeuvre du procédé selon la revendication 9.

11. Réseau d'ordinateurs numériques interconnectés ayant chacun des dispositifs d'entrée et de sortie, une mémoire, une mémoire de masse et une unité centrale de traitement, les ordinateurs du réseau étant programmés afin qu'ils fonctionnent par mise en oeuvre du procédé selon la revendication 9.
